# EUROPEAN PATENT APPLICATION

(11) **EP 4 563 652 A1**
(43) Date of publication of application: **04.06.2025**
(21) Application number: 23846181.8
(22) Date of filing: 06.07.2023
(51) Int. Cl.: C08L 53/02, C08F 8/04, C08F 297/04, C08J 9/06, C08L 23/00, C09K 3/10

(54) **CROSSLINKABLE POLYMER COMPOSITION, CROSSLINKED PRODUCT, AND CROSSLINKED FOAM**

(30) Priority: 27.07.2022 JP 2022119874
(71) Applicant: Zeon Corporation, Tokyo 100-8246 (JP)
(72) Inventor: KATO, Daisuke, Tokyo 100-8246 (JP)
(74) Representative: Kraus & Lederer PartGmbB
(86) International application number: PCT/JP2023/025194
(87) International publication number: WO 2024/024449

(57) **Abstract**

Provided is a cross-linkable polymer composition comprising a hydrogenated block copolymer composition comprising a hydrogenated block copolymer A represented by General Formula (A) and a hydrogenated block copolymer B represented by General Formula (B) in a specific weight ratio (A/B) and having a hydrogenation ratio of olefins of 10 to 100%; and a polyolefin thermoplastic resin C in a specific ratio (C/(A+B)); and further comprising a cross-linking agent.

## Description

### TECHNICAL FIELD

The present invention relates to a cross-linkable polymer composition, and more specifically to a cross-linkable polymer composition that has excellent molding properties and can provide a cross-linked product ensuring a good balance of high resilience and excellent compression set resistance.

### BACKGROUND ART

Aromatic vinyl-conjugated diene-aromatic vinyl block copolymers, such as a styrene-isoprene-styrene block copolymer (SIS), and a styrene-butadiene-styrene block copolymer (SBS), are thermoplastic elastomers having characteristic properties in various aspects, and therefore are used in various applications.

For example, Patent Document 1 discloses a cross-linkable and foamable composition comprising a vinyl aromatic copolymer containing (A) an ethylene-based copolymer, (B) a vinyl aromatic copolymer containing a vinyl aromatic monomer unit and a conjugated diene monomer unit having an unsaturated bond, (C) an organic peroxide, and (D) a foaming agent, wherein the mass ratio (A/B) of the component (A) to the component (B) is 97/3 to 50/50, and the component (B) contains 5% by mass or more and 80% by mass or less of the vinyl aromatic monomer unit, and the component (B) contains 5 to 55% by mass of the conjugated diene monomer unit. However, the technique disclosed in Patent Document 1 failed to ensure both high resilience and compression set resistance of the cross-linked product to be obtained.

### RELATED ART DOCUMENTS

### PATENT DOCUMENTS

Patent Document 1: WO 2010/073589

### SUMMARY OF THE INVENTION

### PROBLEM TO BE SOLVED BY THE INVENTION

The present invention has been made in consideration of such circumstances, and the object of the present invention is to provide a cross-linkable polymer composition that has excellent molding properties and can provide a cross-linked product ensuring a good balance of high resilience and excellent compression set resistance.

### MEANS FOR SOLVING THE PROBLEMS

The present inventor, who has conducted research to achieve the above object, has found that the above object can be achieved by a cross-linkable polymer composition comprising a hydrogenated block copolymer composition comprising a hydrogenated block copolymer A represented by General Formula (A) and a hydrogenated block copolymer B represented by General Formula (B) in a specific weight ratio (A/B) and having a hydrogenation ratio of olefins of 10 to 100%; and a polyolefin thermoplastic resin C in a specific ratio (C/(A+B)); and further comprising a cross-linking agent. With this finding, the present inventor completed the preset invention.

In other words, the present invention provides a cross-linkable polymer composition as described below.
[1] A cross-linkable polymer composition comprising:
   a hydrogenated block copolymer composition comprising a hydrogenated block copolymer A represented by General Formula (A) and a hydrogenated block copolymer B represented by General Formula (B);
   a polyolefin thermoplastic resin C; and
   a cross-linking agent,
   wherein the hydrogenation ratio of olefins in the polymer components contained in the hydrogenated block copolymer composition is 10 to 100%,
   the weight ratio (A/B) of the hydrogenated block copolymer A to the hydrogenated block copolymer B in the hydrogenated block copolymer composition is 10/90 to 80/20, and
   the weight ratio (C/(A+B)) of the content of the polyolefin thermoplastic resin C to the total content of the hydrogenated block copolymer A and the hydrogenated block copolymer B is 5/95 to 80/20:

      Ar1^{a}-HD^{a}-Ar2^{a} (A)

      Ar1^{b}-HD^{b}-Ar2^{b} (B)

      (where in General Formulae (A) and (B), Ar1^{a}, Ar2^{a}, Ar1^{b}, and Ar2^{b} are each an aromatic vinyl polymer block, HD^{a} and HD^{b} are each a hydrogenated polymer block of a conjugated diene polymer, the ratio (Mw(Ar2^{a})/Mw(Ar1^{a})) of the weight average molecular weight of Ar2^{a} (Mw(Ar2^{a})) to the weight average molecular weight of Ar1^{a} (Mw(Ar1^{a})) is 3.0 to 20, and the ratio (Mw(Ar2^{b})/Mw(Ar1^{b})) of the weight average molecular weight of Ar2^{b} (Mw(Ar2^{b})) to the weight average molecular weight of Ar1^{b} (Mw(Ar1^{b})) is 0.95 to 1.05).
[2] The cross-linkable polymer composition according to [1], wherein the proportion of aromatic vinyl monomer units is 20 to 70 % by weight in the total repeating units of the polymer components in the hydrogenated block copolymer composition.
[3] The cross-linkable polymer composition according to [1] or [2], wherein in General Formula (A) and General Formula (B) above of the hydrogenated block copolymer composition, HD^{a} and HD^{b} each have a vinyl bond content of 1 to 80 mol%.
[4] The cross-linkable polymer composition according to any one of [1] to [3], wherein in General Formula (A) and General Formula (B) above of the hydrogenated block copolymer composition, Ar1^{a}, Ar1^{b}, and Ar2^{b} each have a weight average molecular weight in the range of 2,000 to 40,000, and HD^{a} and HD^{b} each have a weight average molecular weight in the range of 10,000 to 300,000.
[5] The cross-linkable polymer composition according to any one of [1] to [4], wherein the weight average molecular weight of the total polymer components contained in the hydrogenated block copolymer composition is 30,000 to 400,000.
[6] The cross-linkable polymer composition according to any one of [1] to [5], wherein the polyolefin thermoplastic resin C is an ethylene resin.
[7] The cross-linkable polymer composition according to any one of [1] to [6], wherein the weight ratio (C/(A+B)) of the content of the polyolefin thermoplastic resin C to the total content of the hydrogenated block copolymer A and the hydrogenated block copolymer B is 15/85 to 50/50.
[8] The cross-linkable polymer composition according to any one of [1] to [7], further comprising a foaming agent.
[9] The cross-linkable polymer composition according to [8], wherein the foaming agent is a chemical foaming agent.

The present invention also provides a cross-linked product and a cross-linked foam body as described below.
[10] A cross-linked product which is a cross-linked product of the cross-linkable polymer composition according to any one of [1] to [9].
[11] A cross-linked foam body which is a cross-linked and foamed product of the cross-linkable polymer composition according to any one of [1] to [9].
[12] The cross-linked foam body according to [11], being a shoe midsole.
[13] The cross-linked foam body according to [11], being a cushioning material for batteries.
[14] The cross-linked foam body according to [11], being a weather strip.
[15] The cross-linked foam body according to any one of [11] to [14], having an apparent density of 0.06 to 0.60 g/cm³.

### EFFECTS OF THE INVENTION

The present invention can provide a cross-linkable polymer composition that has excellent molding properties and can provide a cross-linked product ensuring a good balance of high resilience and excellent compression set resistance.

### DESCRIPTION OF EMBODIMENTS

The cross-linkable polymer composition according to the present invention comprises a hydrogenated block copolymer composition, a polyolefin thermoplastic resin C, and a cross-linking agent as described below.

The cross-linkable polymer composition according to the present invention has sufficient cross-linkability, and thus can achieve sufficient effects by cross-linking. Furthermore, it is considered that since the cross-linkable polymer composition according to the present invention comprises a hydrogenated block copolymer composition having a specific constitution and the polyolefin thermoplastic resin C, as polymer components, in a specific ratio, a cross-linked product having excellent strain hardening properties can be obtained. The cross-linkable polymer composition according to the present invention as described above can provide a cross-linked product that ensures a good balance of high resilience and excellent compression set resistance.

In addition, since the present invention can achieve sufficient cross-linkability and excellent strain hardening properties, defects in molding can be prevented when molding is performed concurrently with or after cross-linking of the cross-linkable polymer composition according to the present invention. Accordingly, the molding can be performed with a high strain (e.g., molding at a high stretching ratio or a high foaming ratio). On the other hand, with respect to the production of a cross-linked foam body, the cross-linkable polymer composition according to the present invention can effectively reduce leakage of bubbles from the cross-linkable polymer composition during cross-linking and foaming, and thus can not only be foamed at a high foaming ratio, but also provide a highly uniform cross-linked foam body. As described above, the cross-linkable polymer composition according to the present invention can be used in various methods for molding such as stretch blow molding and foam molding, and has excellent molding properties.

### [Hydrogenated block copolymer composition]

The hydrogenated block copolymer composition contained in the cross-linkable polymer composition according to the present invention comprises a hydrogenated block copolymer A represented by General Formula (A) and a hydrogenated block copolymer B represented by General Formula (B), wherein the hydrogenation ratio of olefins in the polymer components contained in the hydrogenated block copolymer composition is 10 to 100%, and the weight ratio (A/B) of the hydrogenated block copolymer A to the hydrogenated block copolymer B in the hydrogenated block copolymer composition is 10/90 to 80/20:

Ar1^{a}-HD^{a}-Ar2^{a} (A)

Ar1^{b}-HD^{b}-Ar2^{b} (B)

(where in General Formulae (A) and (B), Ar1^{a}, Ar2^{a}, Ar1^{b}, and Ar2^{b} are each an aromatic vinyl polymer block, HD^{a} and HD^{b} are each a hydrogenated polymer block of a conjugated diene polymer, the ratio (Mw(Ar2^{a})/Mw(Ar1^{a})) of the weight average molecular weight of Ar2^{a} (Mw(Ar2^{a})) to the weight average molecular weight of Ar1^{a} (Mw(Ar1^{a})) is 3.0 to 20, and the ratio (Mw(Ar2^{b})/Mw(Ar1^{b})) of the weight average molecular weight of Ar2^{b} (Mw(Ar2^{b})) to the weight average molecular weight of Ar1^{b} (Mw(Ar1^{b})) is 0.95 to 1.05).

Although not particularly limited, the hydrogenated block copolymer composition used in the present invention is preferably a composition comprising only the hydrogenated block copolymer A and the hydrogenated block copolymer B as polymer components.

The aromatic vinyl polymer blocks Ar1^{a}, Ar2^{a}, Ar1^{b}, and Ar2^{b} of the hydrogenated block copolymer A and the hydrogenated block copolymer B are polymer blocks containing aromatic vinyl monomer units.

The aromatic vinyl monomer used to form aromatic vinyl monomer units can be any aromatic vinyl compound without limitation. Examples of aromatic vinyl compounds include styrene; styrenes substituted by an alkyl group, such as α-methylstyrene, 2-methylstyrene, 3-methylstyrene, 4-methylstyrene, 2-ethylstyrene, 3-ethylstyrene, 4-ethylstyrene, 2,4-diisopropylstyrene, 2,4-dimethylstyrene, 4-t-butylstyrene, and 5-t-butyl-2-methylstyrene; styrenes substituted by a halogen atom, such as 2-chlorostyrene, 3-chlorostyrene, 4-chlorostyrene, 4-bromostyrene, 2-methyl-4,6-dichlorostyrene, and 2,4-dibromostyrene; vinyl naphthalene; and the like. Among these, preferred is use of styrene. For each of the aromatic vinyl polymer blocks, these aromatic vinyl monomers can be used alone or in combination. For the aromatic vinyl polymer blocks, the same aromatic vinyl monomer may be used, or different aromatic vinyl monomers may be used. The content of the aromatic vinyl monomer units in each aromatic vinyl polymer block is preferably 80% by weight or more, more preferably 90% by weight or more, particularly preferably substantially 100% by weight in the total aromatic vinyl polymer blocks.

The aromatic vinyl polymer blocks Ar1^{a}, Ar2^{a}, Ar1^{b}, and Ar2^{b} contained in the hydrogenated block copolymer A and the hydrogenated block copolymer B may contain monomer units other than the aromatic vinyl monomer units. Examples of monomers which can form the monomer units other than the aromatic vinyl monomer units include conjugated diene monomers such as 1,3-butadiene and isoprene (2-methyl-1,3-butadiene); α,β-unsaturated nitrile monomers; unsaturated carboxylic acid monomers or acid anhydride monomers thereof; unsaturated carboxylic acid ester monomers; non-conjugated diene monomers; and the like.

The content of the monomer units other than the aromatic vinyl monomer units in each aromatic vinyl polymer block is preferably 20% by weight or less, more preferably 10% by weight or less, particularly preferably substantially 0% by weight in the total aromatic vinyl polymer blocks.

The hydrogenated polymer blocks HD^{a} and HD^{b} of the conjugated diene polymers contained in the hydrogenated block copolymer A and the hydrogenated block copolymer B, respectively, are polymer blocks containing conjugated diene monomer units, where at least part of the conjugated diene monomer units contained in the polymer blocks is hydrogenated.

The conjugated diene monomer used to form the conjugated diene monomer units can be any conjugated diene compound. Examples of the conjugated diene compound include 1,3-butadiene, isoprene, 2,3-dimethyl-1,3-butadiene, 2-chloro-1,3-butadiene, 1,3-pentadiene, 1,3-hexadiene, and the like. Among these, preferred is use of 1,3-butadiene and/or isoprene, and particularly preferred is use of isoprene from the viewpoint of reactivity in polymerization reaction. For each of the hydrogenated polymer blocks, these conjugated diene monomers can be used alone or in combination. For the hydrogenated polymer blocks, the same conjugated diene monomer may be used, or different conjugated diene monomers can be used. The content of the conjugated diene monomer units (including hydrogenated conjugated diene monomer units) in each hydrogenated polymer block is preferably 80% by weight or more, more preferably 90% by weight or more, particularly preferably substantially 100% by weight in the total conjugated diene polymer blocks.

The hydrogenated polymer blocks HD^{a} and HD^{b} of the conjugated diene polymers contained in the hydrogenated block copolymer A and the hydrogenated block copolymer B, respectively, may contain monomer units other than the conjugated diene monomer units. Examples of monomers which can form the monomer units other than the conjugated diene monomer units include aromatic vinyl monomers such as styrene and α-methylstyrene; α,β-unsaturated nitrile monomers; unsaturated carboxylic acid monomers or acid anhydride monomers thereof; unsaturated carboxylic acid ester monomers; non-conjugated diene monomers; and the like.

The content of the monomer units other than the conjugated diene monomer units (including hydrogenated conjugated diene monomer units) in each hydrogenated polymer block is preferably 20% by weight or less, more preferably 10% by weight or less, particularly preferably substantially 0% by weight in the total conjugated diene polymer blocks.

With respect to the hydrogenated block copolymer A contained in the hydrogenated block copolymer composition, the ratio (Mw(Ar2^{a}))/(Mw(Ar1^{a})) of the weight average molecular weight of Ar2^{a} (Mw(Ar2^{a})) to the weight average molecular weight of Ar1^{a} (Mw(Ar1^{a})) is in the range of 3.0 to 20. This means that the hydrogenated block copolymer A is a hydride of an asymmetric aromatic vinyl-conjugated diene-aromatic vinyl block copolymer composed of a sequence of the aromatic vinyl polymer block Ar1^{a} having a relatively small weight average molecular weight, the hydrogenated polymer block HD^{a} of the conjugated diene polymer, and the aromatic vinyl polymer block Ar2^{a} having a relatively large weight average molecular weight in this order.

In the hydrogenated block copolymer A, Mw(Ar2^{a})/Mw(Ar1^{a}) is in the range of 3.0 to 20. When Mw(Ar2^{a})/Mw(Ar1^{a}) is excessively small or excessively large, it is difficult to ensure both high resilience and compression set resistance of the cross-linked product to be obtained. Mw(Ar2^{a})/Mw(Ar1^{a}) is preferably in the range of 4.0 to 16, more preferably in the range of 5.0 to 13. When Mw(Ar2^{a})/Mw(Ar1^{a}) is within the above ranges, molding properties can be further improved, and both high resilience and compression set resistance of the cross-linked product to be obtained can be ensured at higher levels. In the present invention, the weight average molecular weight (Mw) of the polymer or the polymer block and the number average molecular weight (Mn) thereof each are determined as a value against polystyrene standards in the measurement by high performance liquid chromatography.

The weight average molecular weight (Mw(Ar1^{a})) of the aromatic vinyl polymer block Ar1^{a} having a relatively small weight average molecular weight, which is contained in the hydrogenated block copolymer A, is preferably 2,000 to 40,000, more preferably 2,500 to 15,000, further more preferably 3,000 to 8,000. When Mw(Ar1^{a}) is within the above ranges, molding properties can be further improved, and both high resilience and compression set resistance of the cross-linked product to be obtained can be ensured at higher levels, and, in addition, mechanical properties can be also improved.

The weight average molecular weight (Mw(Ar2^{a})) of the aromatic vinyl polymer block Ar2^{a} having a relatively large weight average molecular weight, which is contained in the hydrogenated block copolymer A, is preferably 5,000 to 250,000, more preferably 10,000 to 120,000, further more preferably 20,000 to 80,000. When Mw(Ar2^{a}) is within the above ranges, molding properties can be further improved, and both high resilience and compression set resistance of the cross-linked product to be obtained can be ensured at higher levels, and, in addition, mechanical properties can be also improved.

The vinyl bond content (the proportion of 1,2-vinyl bonds and 3,4-vinyl bonds in the total conjugated diene monomer units) in the hydrogenated polymer block HD^{a} of the conjugated diene polymer contained in the hydrogenated block copolymer A is preferably 1 to 80 mol%, more preferably 3 to 20 mol%, further more preferably 5 to 12 mol%. When the vinyl bond content is within the above ranges, both high resilience and compression set resistance of the cross-linked product to be obtained can be ensured at higher levels. The vinyl bond content in the hydrogenated polymer block of the conjugated diene polymer can be determined by ¹H-NMR using deuterochloroform as a solvent.

The weight average molecular weight (Mw(HD^{a})) of the hydrogenated polymer block HD^{a} of the conjugated diene polymer contained in the hydrogenated block copolymer A is preferably 10,000 to 300,000, more preferably 15,000 to 300,000, further more preferably 15,000 to 150,000, particularly preferably 20,000 to 80,000.

Although not particularly limited, the content of the aromatic vinyl monomer units in the total monomer units in the hydrogenated block copolymer A is preferably 30 to 95% by weight, more preferably 35 to 90% by weight, further more preferably 40 to 87% by weight, particularly preferably 45 to 85% by weight. The content of the aromatic vinyl monomer units in the total monomer units in the hydrogenated block copolymer A can be determined based on the ratio of intensities detected by the differential refractometer and the ultraviolet detector in the measurement by high performance liquid chromatography.

Although not particularly limited, the weight average molecular weight of the entire hydrogenated block copolymer A is preferably 20,000 to 500,000, more preferably 25,000 to 300,000, still more preferably 30,000 to 150,000.

The hydrogenated block copolymer B contained in the hydrogenated block copolymer composition is a hydride of an aromatic vinyl-conjugated diene-aromatic vinyl block copolymer composed of the conjugated diene polymer block HD^{b} and two aromatic vinyl polymer blocks, i.e., Ar1^{b} and Ar2^{b} bonded to the two terminals of the conjugated diene polymer block HD^{b}, respectively. The weight average molecular weights (Mw(Ar1^{b}), Mw(Ar2^{b})) of the two aromatic vinyl polymer blocks Ar1^{b} and Ar2^{b} contained in the hydrogenated block copolymer B are such that the ratio (Mw(Ar2^{b})/Mw(Ar1^{b})) of the weight average molecular weight of Ar2^{b} (Mw(Ar2^{b})) to the weight average molecular weight of Ar1^{b} (Mw(Ar1^{b})) is 0.95 to 1.05.

The weight average molecular weights (Mw(Ar1^{b}), Mw(Ar2^{b})) of the two aromatic vinyl polymer blocks Ar1^{b} and Ar2^{b} contained in the hydrogenated block copolymer B are each preferably 2,000 to 40,000, more preferably 2,500 to 15,000, further more preferably 3,000 to 8,000. When Mw(Ar1^{b}) and Mw(Ar2^{b}) are within the above ranges, molding properties can be further improved, and both high resilience and compression set resistance of the cross-linked product to be obtained can be ensured at higher levels, and, in addition, mechanical properties can be also improved. The weight average molecular weights (Mw(Ar1^{b}), Mw(Ar2^{b})) of the two aromatic vinyl polymer blocks Ar1^{b} and Ar2^{b} may be equal to each other or different from each other, but preferably are substantially equal to each other. For example, the ratio (Mw(Ar2^{b}))/(Mw(Ar1^{b})) of the weight average molecular weight of Ar2^{b} (Mw(Ar2^{b})) to the weight average molecular weight of Ar1^{b} (Mw(Ar1^{b})) may be in the range of 0.95 to 1.05, but preferably is in the range of 0.97 to 1.03.

In addition, the weight average molecular weight (Mw(Ar1^{b}), Mw(Ar2^{b})) of at least one of these two aromatic vinyl polymer blocks Ar1^{b} and Ar2^{b} may be equal or different, but is preferably substantially equal to the weight average molecular weight (Mw(Ar1^{a})) of the aromatic vinyl polymer block Ar1^{a} having a relatively small weight average molecular weight, which is contained in the hydrogenated block copolymer A. For example, the ratio (Mw(Ar1^{b})/Mw(Ar1^{a})) of the weight average molecular weight (Mw(Ar1^{b})) of Ar1^{b} to the weight average molecular weight (Mw(Ar1^{a})) of Ar1^{a} may be in the range of 0.9 to 2.2, or the ratio (Mw(Ar2^{b})/Mw(Ar1^{a})) of the weight average molecular weight (Mw(Ar2^{b})) of Ar2^{b} to the weight average molecular weight (Mw(Ar1^{a})) of Ar1^{a} may be in the range of 0.9 to 2.2. Further, for example, preferably, the ratio (Mw(Ar1^{b})/Mw(Ar1^{a})) of the weight average molecular weight (Mw(Ar1^{b})) of Ar1^{b} to the weight average molecular weight (Mw(Ar1^{a})) of Ar1^{a} is in the range of 0.95 to 1.05, or the ratio (Mw(Ar2^{b})/Mw(Ar1^{a})) of the weight average molecular weight (Mw(Ar2^{b})) of Ar2^{b} to the weight average molecular weight (Mw(Ar1^{a})) of Ar1^{a} is in the range of 0.95 to 1.05.

The vinyl bond content (the proportion of 1,2-vinyl bonds and 3,4-vinyl bonds in the total conjugated diene monomer units) in the hydrogenated polymer block HD^{b} of the conjugated diene polymer contained in the hydrogenated block copolymer B is preferably 1 to 80 mol%, more preferably 3 to 20 mol%, further more preferably 5 to 12 mol%. When the vinyl bond content is within the above ranges, both high resilience and compression set resistance of the cross-linked product to be obtained can be ensured at higher levels. The vinyl bond content in the hydrogenated polymer block of the conjugated diene polymer can be determined by ¹H-NMR using deuterochloroform as a solvent. The vinyl bond content in the hydrogenated polymer block HD^{b} of the conjugated diene polymer contained in the hydrogenated block copolymer B is preferably substantially equal to the vinyl bond content in the hydrogenated polymer block HD^{a} of the conjugated diene polymer contained in the hydrogenated block copolymer A. For example, the ratio of the vinyl bond content in the hydrogenated polymer block HD^{b} of the conjugated diene polymer contained in the hydrogenated block copolymer B to the vinyl bond content in the hydrogenated polymer block HD^{a} of the conjugated diene polymer contained in the hydrogenated block copolymer A is preferably in the range of 0.95 to 1.05.

If the hydrogenated block copolymer composition used in the present invention is produced by a production method using a coupling agent, such as a method for producing the hydrogenated block copolymer composition, comprising steps (1a) to (6a) described later, the hydrogenated polymer block HD^{b} of the conjugated diene polymer contained in the hydrogenated block copolymer B may contain a residue of the coupling agent. Specifically, the hydrogenated block copolymer B may be a compound represented by the following formula:

Ar1^{b}-(HD^{b'}-X-HD^{b"}) -Ar2^{b}

Namely, according to an embodiment, as shown in the above formula, the hydrogenated polymer block HD^{b} of the conjugated diene polymer may be composed of HD^{b'} and HD^{b"} coupled via the residue X of the coupling agent. Examples of the residue X of the coupling agent include residues of bifunctional coupling agents exemplified in the method for producing the hydrogenated block copolymer composition described later, which comprises the steps (1a) to (6a).

The weight average molecular weight (Mw(HD^{b})) of the hydrogenated polymer block HD^{b} of the conjugated diene polymer contained in the hydrogenated block copolymer B is preferably 10,000 to 300,000, more preferably 15,000 to 300,000, further more preferably 15,000 to 150,000, particularly preferably 20,000 to 80,000.

Although not particularly limited, the content of the aromatic vinyl monomer units in the total monomer units in the hydrogenated block copolymer B is preferably 10 to 60% by weight, more preferably 15 to 40% by weight, further more preferably 20 to 35% by weight. The content of the aromatic vinyl monomer units in the total monomer units in the hydrogenated block copolymer A can be determined based on the ratio of intensities detected by the differential refractometer and the ultraviolet detector in the measurement by high performance liquid chromatography.

Although not particularly limited, the weight average molecular weight of the entire hydrogenated block copolymer B is preferably 20,000 to 200,000, more preferably 25,000 to 150,000, still more preferably 30,000 to 70,000.

Although not particularly limited, the hydrogenated block copolymer A and the hydrogenated block copolymer B contained in the hydrogenated block copolymer composition used in the present invention and the polymer blocks contained in these block copolymers each have a molecular weight distribution of preferably 1.1 or less, more preferably 1.05 or less, the molecular weight distribution being represented by the ratio [(Mw)/(Mn)] of the weight average molecular weight (Mw) to the number average molecular weight (Mn).

The weight ratio (A/B) of the hydrogenated block copolymer A to the hydrogenated block copolymer B contained in the hydrogenated block copolymer composition used in the present invention is 10/90 to 80/20. When the weight ratio (A/B) is excessively small or excessively large, it is difficult to ensure both high resilience and compression set resistance of the cross-linked product to be obtained. The weight ratio (A/B) is preferably 20/80 to 60/40, more preferably 25/75 to 50/50. When the ratio of the hydrogenated block copolymer A to the hydrogenated block copolymer B contained is within the above ranges, molding properties can be further improved, and both high resilience and compression set resistance of the cross-linked product to be obtained can be ensured at higher levels. The weight ratio (A/B) of the hydrogenated block copolymer A to the hydrogenated block copolymer B can be calculated from the ratio of the peak areas corresponding to the respective block copolymers in a chart obtained by high performance liquid chromatography.

In the hydrogenated block copolymer composition used in the present invention, the hydrogenation ratio of olefins in the polymer components contained in the hydrogenated block copolymer composition is in the range of 10 to 100%. The hydrogenation ratio of olefins refers to the hydrogenation ratio of olefins in the total polymer components contained in the hydrogenated block copolymer composition, and specifically refers to the proportion (mol%) of hydrogenated double bonds in the total non-aromatic carbon-carbon double bonds contained in the polymer components before hydrogenation. When the hydrogenation ratio of olefins is excessively low, it is difficult to ensure both high resilience and compression set resistance of the cross-linked product to be obtained. Furthermore, when molding is performed concurrently with or after cross-linking, defects in molding are likely to occur. The hydrogenation ratio of olefins is preferably 80 to 100%, more preferably 90 to 100%, further more preferably 95 to 100%. When the hydrogenation ratio of olefins is within the above ranges, effects of cross-linking can be further improved, and a cross-linked product having high resilience and excellent compression set resistance, and, in addition, having excellent mechanical properties and dimensional stability can be provided with excellent molding properties and good productivity. The hydrogenation ratio of olefins can be determined by ¹H-NMR spectrum measurement using deuterochloroform as a solvent.

In the hydrogenated block copolymer composition, the proportion of aromatic vinyl monomer units to the total polymer components in the hydrogenated block copolymer composition (the total monomer units contained in the polymer components) (hereinafter, the proportion is referred to as "the content of the total aromatic vinyl monomer units" in some cases) is preferably 20 to 70 % by weight, more preferably 25 to 60 % by weight, further more preferably 30 to 55 % by weight. When the content of the total aromatic vinyl monomer units is within the above ranges, molding properties can be further improved, and both high resilience and compression set resistance of the cross-linked product to be obtained can be ensured at higher levels, and, in addition, mechanical properties can be also improved. The content of the total aromatic vinyl monomer units can be easily modified by modifying the amounts of the hydrogenated block copolymer A, the hydrogenated block copolymer B, and the polymer components other than these hydrogenated block copolymers, which are contained in the hydrogenated block copolymer composition, in consideration of the contents of aromatic vinyl monomer units therein. The content of the total aromatic vinyl monomer units can be determined by ¹H-NMR measurement using deuterochloroform as a solvent.

If all the polymer components contained in the hydrogenated block copolymer composition are composed of only aromatic vinyl monomer units and conjugated diene monomer units, only the aromatic vinyl monomer units can be extracted according to the method described in Rubber Chem. Technol., 45, 1295 (1972) by subjecting the polymer components in the hydrogenated block copolymer composition to ozone decomposition, followed by reduction with lithium aluminum hydride to decompose the conjugated diene monomer units (including the hydrogenated ones). Thus, the content of the total aromatic vinyl monomer units can be readily measured. Using a similar method, the content of the aromatic vinyl monomer units and the content of the conjugated diene monomer units in each block copolymer can be determined.

Although not particularly limited, the weight average molecular weight of the total polymer components contained in the hydrogenated block copolymer composition used in the present invention is preferably 30,000 to 400,000, more preferably 35,000 to 100,000, further more preferably 40,000 to 80,000. When the weight average molecular weight of the total polymer components is within the above ranges, molding properties can be further improved, and both high resilience and compression set resistance of the cross-linked product to be obtained can be ensured at higher levels, and, in addition, mechanical properties can be also improved.

Further, although not particularly limited, the molecular weight distribution represented by the ratio (Mw/Mn) of the weight average molecular weight (Mw) to the number average molecular weight (Mn) of the total polymer components contained in the hydrogenated block copolymer composition used in the present invention is preferably 1 to 5, more preferably 1.01 to 3, further more preferably 1.02 to 1.5.

### [Method of producing hydrogenated block copolymer composition]

The hydrogenated block copolymer composition used in the present invention can be produced by any method; for example, the hydrogenated block copolymer composition can be produced according to a traditional method for producing a block copolymer and a traditional hydrogenation method by separately preparing the hydrogenated block copolymer A and the hydrogenated block copolymer B, optionally compounding an additional polymer component and a variety of additives, and mixing these by a normal method such as kneading or solution mixing. On the other hand, in the present invention, the method described below is suitable because the hydrogenated block copolymer composition can be produced with high productivity.

In other words, the method for producing the hydrogenated block copolymer composition used in the present invention preferably comprises steps (1) to (7) of:
(1): preparing a solution containing a terminally active aromatic vinyl polymer by polymerizing an aromatic vinyl monomer in a solvent in the presence of a polymerization initiator;
(2): preparing a solution containing a terminally active aromatic vinyl-conjugated diene block copolymer by adding a conjugated diene monomer to the solution containing a terminally active aromatic vinyl polymer prepared in the step (1), and polymerizing the conjugated diene monomer;
(3): preparing a solution containing a terminally active aromatic vinyl-conjugated diene-aromatic vinyl block copolymer by adding an aromatic vinyl monomer to the solution containing a terminally active aromatic vinyl-conjugated diene block copolymer prepared in the step (2), and polymerizing the aromatic vinyl monomer;
(4): preparing a solution containing a block copolymer **B'** by adding a polymerization terminator to the solution containing a terminally active aromatic vinyl-conjugated diene-aromatic vinyl block copolymer, which is prepared in the step (3), in an amount of less than 1 molar equivalent relative to the active terminal of the terminally active aromatic vinyl-conjugated diene-aromatic vinyl block copolymer to deactivate a portion of the active terminal;
(5): preparing a solution containing the block copolymer B' and a block copolymer A' by adding an aromatic vinyl monomer to the solution containing the block copolymer B' prepared in the step (4), and polymerizing the aromatic vinyl monomer;
(6): preparing a solution containing a hydrogenated block copolymer B and a hydrogenated block copolymer A by hydrogenating the solution containing the block copolymer B' and the block copolymer A' prepared in the step (5); and
(7): recovering a hydrogenated block copolymer composition from the solution containing the hydrogenated block copolymer B and the hydrogenated block copolymer A prepared in the step (6).

### <Step (1)>

In this method for producing a hydrogenated block copolymer composition, first, in the step (1), a solution containing a terminally active aromatic vinyl polymer is prepared by polymerizing an aromatic vinyl monomer in a solvent in the presence of a polymerization initiator.

As the polymerization initiator, a polymerization initiator known to have anionic polymerization activity to aromatic vinyl monomers and conjugated diene monomers can be used. Examples of the polymerization initiator include organic alkali metal compounds, organic alkaline earth compounds, organic lanthanoid rare earth metal compounds, and the like.

For the organic alkali metal compounds, particularly suitably used are organic lithium compounds having one or more lithium atoms in the molecule. Specific examples of the organic alkali metal compounds include organic monolithium compounds such as ethyllithium, n-propyllithium, isopropyllithium, n-butyllithium, sec-butyllithium, t-butyllithium, hexyllithium, phenyllithium, stilbenelithium, dialkylaminolithium compounds, diphenylaminolithium, and ditrimethylsilylaminolithium; organic dilithium compounds such as methylenedilithium, tetramethylenedilithium, hexamethylenedilithium, isoprenyldilithium, and 1,4-dilithio-ethylcyclohexane; organic trilithium compounds such as 1,3,5-trilithiobenzene; and the like. Among these, organic monolithium compounds are particularly suitably used.

Examples of the organic alkaline earth metal compounds include n-butylmagnesium bromide, n-hexylmagnesium bromide, ethoxycalcium, calcium stearate, t-butoxystrontium, ethoxybarium, isopropoxybarium, ethylmercaptobarium, t-butoxybarium, phenoxybarium, diethylaminobarium, barium stearate, ethylbarium, and the like.

Besides, those which form a homogeneous system in an organic solvent to have living polymerizability can also be used, for example, composite catalysts composed of lanthanoid rare earth metal compounds (including neodymium, samarium, gadolinium, and the like)/alkylaluminum/alkylaluminum halide/alkylaluminum hydride, or metallocene catalysts containing titanium, vanadium, samarium, gadolinium, or the like.

These polymerization initiators may be used alone or in combination as a mixture. The amount of the polymerization initiator to be used may be determined according to the target molecular weight of each block copolymer and is not particularly limited. The amount thereof is preferably 0.01 to 20 mmol, more preferably 0.05 to 15 mmol, still more preferably 0.1 to 10 mmol per 100 g of the total monomers to be used in polymerization.

The solvent used in polymerization can be any solvent inactive to the polymerization initiator and is not particularly limited. Examples thereof include chain hydrocarbon solvents, cyclic hydrocarbon solvents, a mixed solvent thereof, and the like. Examples of the chain hydrocarbon solvents include C₄ to C₆ chain alkanes and alkenes such as n-butane, isobutane, 1-butene, isobutylene, trans-2-butene, cis-2-butene, 1-pentene, trans-2-pentene, cis-2-pentene, n-pentane, isopentane, neo-pentane, and n-hexane; and the like. Examples of the cyclic hydrocarbon solvents include aromatic compounds such as benzene, toluene, and xylene; alicyclic hydrocarbon compounds such as cyclopentane and cyclohexane; and the like. These solvents may be used alone or in combination as a mixture.

Although not particularly limited, the amount of the solvent to be used is set such that the content of the total block copolymers in the solution after the polymerization reaction is preferably 5 to 60% by weight, more preferably 10 to 55% by weight, still more preferably 20 to 50% by weight.

During production of the hydrogenated block copolymer composition, a Lewis base compound may be added to the reaction system to control the structures of the polymer blocks in each of the block copolymers. Examples of the Lewis base compound include ethers such as tetrahydrofuran, diethyl ether, dioxane, ethylene glycol dimethyl ether, ethylene glycol dibutyl ether, diethylene glycol dimethyl ether, and diethylene glycol dibutyl ether; tertiary amines such as tetramethylethylenediamine, trimethylamine, triethylamine, pyridine, and quinuclidine; alkali metal alkoxides such as potassium t-amyloxide and potassium t-butyloxide; phosphines such as triphenylphosphine; and the like. These Lewis base compounds may be used alone or in combination as a mixture.

During the production of the hydrogenated block copolymer composition, the Lewis base compound can be added at any timing, which may be appropriately determined according to the structures of the block copolymers. For example, the Lewis base compound may be preliminarily added before polymerization is started, or may be added after the polymer blocks are partially polymerized. Furthermore, the Lewis base compound may be preliminarily added before polymerization is started, and may be further added after the polymer blocks are partially polymerized.

The polymerization reaction temperature is preferably 10 to 150°C, more preferably 30 to 130°C, still more preferably 40 to 90°C, and the polymerization time is preferably 48 hours or less, more preferably 0.5 to 10 hours. The polymerization pressure is not particularly limited as long as it is controlled within the range of pressure enough to maintain the monomers and the solvent in a liquid phase at a polymerization temperature.

The solution containing a terminally active aromatic vinyl polymer can be prepared by polymerizing the aromatic vinyl monomer in the solvent in the presence of the polymerization initiator under such conditions. Thus, the terminally active aromatic vinyl polymer prepared in the step (1) will form the aromatic vinyl polymer block Ar1^{a} having a relatively small weight average molecular weight for the hydrogenated block copolymer A and any one of the aromatic vinyl polymer blocks Ar1^{b} and Ar2^{b} (i.e., Ar1^{b} or Ar2^{b}) for the hydrogenated block copolymer B, in which the hydrogenated block copolymer A and the hydrogenated block copolymer B are contained in the hydrogenated block copolymer composition. For this reason, the polymerization conditions in the step (1) including the amount of the aromatic vinyl monomer may be determined according to the target weight average molecular weights of these polymer blocks.

### <Step (2)>

Then, in the step (2), a solution containing a terminally active aromatic vinyl-conjugated diene block copolymer is prepared by adding a conjugated diene monomer to the solution containing a terminally active aromatic vinyl polymer prepared in the step (1), and polymerizing the conjugated diene monomer.

In the step (2), as a result of addition of the conjugated diene monomer to the solution containing a terminally active aromatic vinyl polymer prepared in the step (1), a conjugated diene polymer chain is formed from the active terminal, thereby preparing the solution containing a terminally active aromatic vinyl-conjugated diene block copolymer.

The conjugated diene polymer chain formed in the step (2) (conjugated diene block contained in the terminally active aromatic vinyl-conjugated diene block copolymer prepared in the step (2)) will form the hydrogenated polymer block HD^{a} of the conjugated diene polymer in the hydrogenated block copolymer A and the hydrogenated polymer block HD^{b} of the conjugated diene polymer in the hydrogenated block copolymer B. For this reason, the polymerization conditions in the step (2) including the amount of the conjugated diene polymer may be determined according to the target weight average molecular weights of these polymer blocks, and the like (for example, the polymerization conditions may be determined in the ranges described in the step (1)).

### <Step (3)>

Then, in the step (3), a solution containing a terminally active aromatic vinyl-conjugated diene-aromatic vinyl block copolymer is prepared by adding an aromatic vinyl monomer to the solution containing a terminally active aromatic vinyl-conjugated diene block copolymer prepared in the step (2), and polymerizing the aromatic vinyl monomer.

In the step (3), as a result of addition of the aromatic vinyl monomer to the solution containing a terminally active aromatic vinyl-conjugated diene block copolymer prepared in the step (2), an aromatic vinyl polymer chain is formed from the active terminal, thereby preparing the solution containing a terminally active aromatic vinyl-conjugated diene-aromatic vinyl block copolymer.

The aromatic vinyl polymer chain formed in the step (3) (aromatic vinyl block contained in the terminally active aromatic vinyl-conjugated diene-aromatic vinyl block copolymer prepared in the step (3)) will form one of the aromatic vinyl polymer blocks Ar1^{b} and Ar2^{b} for the hydrogenated block copolymer B (i.e., Ar1^{b} or Ar2^{b} which is a block different from that formed in the step (1), for example, if the polymer chain forms Ar1^{b} in the step (1), Ar2^{b} is the corresponding block). For this reason, the polymerization conditions in the step (3) including the amount of the aromatic vinyl monomer may be determined according to the target weight average molecular weight of such a polymer block (for example, the polymerization conditions may be determined in the ranges described in the step (1)).

### <Step (4)>

Then, in the step (4), a solution containing a block copolymer B' is prepared by adding a polymerization terminator to the solution containing a terminally active aromatic vinyl-conjugated diene-aromatic vinyl block copolymer, which is prepared in the step (3), in an amount of less than 1 molar equivalent relative to the active terminal of the terminally active aromatic vinyl-conjugated diene-aromatic vinyl block copolymer to deactivate a portion of the active terminal.

The block copolymer B' prepared in the step (4) is a block copolymer before hydrogenation for preparing the hydrogenated block copolymer B.

The polymerization terminator can be any compound which can react with the active terminal to deactivate the active terminal and to be no longer reactive with other active terminals after it has reacted with one active terminal, and preferred polymerization terminators are compounds not containing a halogen atom. Among these, particularly preferred are those which generate a metal alkoxide, a metal aryloxide, or a metal hydroxide when reacting with the active terminals. Specific examples of the polymerization terminator include water; monohydric alcohols such as methanol and ethanol; monohydric phenols such as phenol and cresol; and the like.

The amount of the polymerization terminator to be used may be determined according to the proportions of the hydrogenated block copolymer A and the hydrogenated block copolymer B contained in the hydrogenated block copolymer composition, and is not particularly limited as long as it is less than 1 molar equivalent relative to the active terminal of the polymer. The amount of the polymerization terminator to be used is in the range of preferably 0.18 to 0.91 molar equivalents, more preferably 0.35 to 0.80 molar equivalents relative to the active terminal of the polymer.

Thus, in the step (4), as a result of addition of the polymerization terminator to the solution containing a terminally active aromatic vinyl-conjugated diene-aromatic vinyl block copolymer in an amount of less than 1 molar equivalent relative to the active terminal thereof, a portion of the active terminal of the terminally active aromatic vinyl-conjugated diene-aromatic vinyl block copolymer is deactivated, and thus, the copolymer having the deactivated active terminal corresponds to the block copolymer B' before hydrogenation for forming the hydrogenated block copolymer B. The residual terminally active aromatic vinyl-conjugated diene-aromatic vinyl block copolymer without reacting with the polymerization terminator is left unreacted in the solution while it maintains the active terminals.

### <Step (5)>

Then, in the step (5), a solution containing the block copolymer B' and a block copolymer A' is prepared by adding an aromatic vinyl monomer to the solution containing a block copolymer B' prepared in the step (4) and polymerizing the aromatic vinyl monomer.

In the step (5), after the aromatic vinyl monomer is added to the solution prepared in the step (4), the aromatic vinyl monomer is further polymerized to extend the aromatic vinyl polymer chain having the active terminal in the residual terminally active aromatic vinyl-conjugated diene-aromatic vinyl block copolymer without reacting with the polymerization terminator. Thereby, the block copolymer A' is prepared. The block copolymer A' is an aromatic vinyl-conjugated diene-aromatic vinyl block copolymer prepared through extension of the aromatic vinyl polymer chain, and will form a block copolymer before hydrogenation for preparing the hydrogenated block copolymer A.

At this time, the aromatic vinyl polymer chain extended in the step (5) will form the aromatic vinyl polymer block Ar2^{a} having a relatively large weight average molecular weight in the hydrogenated block copolymer A contained in the hydrogenated block copolymer composition. For this reason, the polymerization conditions in the step (5) including the amount of the aromatic vinyl monomer may be determined according to the target weight average molecular weight of such an aromatic vinyl polymer block Ar2^{a} (for example, the polymerization conditions may be determined in the ranges described in the step (1)).

### <Step (6) >

Then, in the step (6), a solution containing a hydrogenated block copolymer B and a hydrogenated block copolymer A is prepared by hydrogenating the solution containing the block copolymer B' and a block copolymer A' prepared in the step (5).

The solution containing the block copolymer B' and a block copolymer A' can be hydrogenated by any method. Examples thereof include a method of bringing the solution containing the block copolymer B' and a block copolymer A' into contact with hydrogen in the presence of a hydrogenation catalyst, and the like.

Examples of the hydrogenation catalyst include, but should not be limited to, Ziegler catalysts such as heterogeneous supported catalysts composed of a metal such as Ni, Pt, Pd, or Ru supported on a carrier such as carbon, silica, alumina, or diatomite in combination with reducing agents such as an organic or acetylacetone salt of Ni, Co, Fe, or Cr and organic Al; organic complex catalysts such as organic metal compounds of Ru, Rh, and the like; homogeneous catalysts such as a titanocene compound in combination with organic Li, organic Al, or organic Mg as a reducing agent; and the like. Among these, Ziegler catalysts are preferred.

Hydrogenation can be performed according to the methods disclosed in JP S42-8704 B, JP S43-6636 B, JP S59-133203 A, JP S60-220147 A, and the like.

Although the conditions for the hydrogenation may be selected according to the hydrogenation ratio of olefins in the polymer components contained in the hydrogenated block copolymer composition, the hydrogenation temperature is preferably 0 to 200°C, more preferably 30 to 150°C. The pressure of hydrogen used in the hydrogenation is preferably 0.1 to 15 MPa, more preferably 0.2 to 10 MPa, still more preferably 0.3 to 5 MPa, and the hydrogenation time is preferably 3 minutes to 10 hours, more preferably 10 minutes to 5 hours. The hydrogenation may be a batch process, a continuous process, or a combination thereof.

### <Step (7)>

Then, in the step (7), the target hydrogenated block copolymer composition is recovered from the solution containing a hydrogenated block copolymer B and a hydrogenated block copolymer A prepared in the step (6).

The recovery may be performed according to a normal method, and the method for recovery is not particularly limited. For example, after the reaction is completed, a polymerization terminator is optionally added to deactivate the active terminal of the terminally active polymer, and further, additives such as an antioxidant are optionally added; thereafter, the solution is treated by a known solvent method such as direct drying or steam stripping. Thereby, the target hydrogenated block copolymer composition can be recovered. In this step, the polymerization terminator described above can be used.

If the hydrogenated block copolymer composition is recovered as a slurry by steam stripping or the like, preferably, the slurry is dehydrated using any dehydrating machine such as an extruder squeezer, and the hydrogenated block copolymer composition in the form of crumbs is recovered. Preferably, the recovered crumbs are dried using any dryer such as a band dryer or an expansion extrusion dryer. The hydrogenated block copolymer composition prepared as above may be processed into pellets or the like according to a normal method before use.

It is preferred that the hydrogenated block copolymer composition in the form of solids (pellets, crumbs, or the like) be used after the water content in the hydrogenated block copolymer composition in the form of solids is reduced using a dryer such as a hopper dryer, a hot air circulating shelf-type dryer, a shelf-type vacuum dryer, or a stirring vacuum dryer. The drying conditions at this time are not particularly limited as long as the target water content can be reached, and may be set according to the water content to be reduced and the type of the dryer. Usually, the drying temperature is set in the range of 40 to 90°C and the drying time is set in the range of 1 to 24 hours.

The method for producing the hydrogenated block copolymer composition described above can provide a target hydrogenated block copolymer composition with productivity higher than that in the case where hydrogenated block copolymers are separately prepared and mixed, because the hydrogenated block copolymer A and the hydrogenated block copolymer B can be continuously prepared in the same reaction vessel.

During production of the hydrogenated block copolymer composition according to the present invention, the above-described suitable production method (the production method comprising the steps (1) to (7)) may be replaced by a method for producing a hydrogenated block copolymer composition, which comprises steps (1a) to (6a) of:
(1a): preparing a solution containing a terminally active aromatic vinyl polymer by polymerizing an aromatic vinyl monomer in a solvent in the presence of a polymerization initiator;
(2a): preparing a solution containing a terminally active aromatic vinyl-conjugated diene block copolymer by adding a conjugated diene monomer to the solution containing a terminally active aromatic vinyl polymer prepared in the step (1a), and polymerizing the conjugated diene monomer;
(3a): preparing a solution containing a block copolymer B' by adding a bifunctional coupling agent to the solution containing a terminally active aromatic vinyl-conjugated diene block copolymer, which is prepared in the step (2a), in an amount such that the total amount of the functional groups is less than 1 molar equivalent relative to the active terminal thereof, to couple a portion of the terminally active aromatic vinyl-conjugated diene block copolymer;
(4a): preparing a solution containing the block copolymer B' and a block copolymer A' by adding an aromatic vinyl monomer to the solution containing the block copolymer B' prepared in the step (3a), and polymerizing the aromatic vinyl monomer;
(5a): preparing a solution containing a hydrogenated block copolymer B and a hydrogenated block copolymer A by hydrogenating the solution containing the block copolymer B' and a block copolymer A' prepared in the step (4a); and
(6a): recovering a hydrogenated block copolymer composition from the solution containing a hydrogenated block copolymer B and a hydrogenated block copolymer A prepared in the step (5a).

### <Steps (1a) and (2a)>

The steps (1a) and (2a) are the same as the steps (1) and (2), and the same conditions can be used.

### <Step (3a)>

In the step (3a), a solution containing a block copolymer B' is prepared by adding a bifunctional coupling agent to the solution containing a terminally active aromatic vinyl-conjugated diene block copolymer, which is prepared in the step (2a), in an amount such that the total amount of the functional groups is less than 1 molar equivalent relative to the active terminal thereof, to couple a portion of the terminally active aromatic vinyl-conjugated diene block copolymer.

The block copolymer B' prepared in the step (3a) will form a block copolymer before hydrogenation for forming the hydrogenated block copolymer B.

The bifunctional coupling agent may be any compound having two functional groups reactive with the active terminal, and examples thereof include, but should not be limited to, bifunctional halogenated silanes such as dichlorosilane, monomethyldichlorosilane, and dimethyldichlorosilane; bifunctional halogenated alkanes such as dichloroethanes, dibromoethane, methylene chloride, and dibromomethane; bifunctional halogenated tin compounds such as dichlorotin, monomethyldichlorotin, dimethyldichlorotin, monoethyldichlorotin, diethyldichlorotin, monobutyldichlorotin, and dibutyldichlorotin; and the like.

The amount of the bifunctional coupling agent to be used may be determined according to the proportions of the hydrogenated block copolymer A and the hydrogenated block copolymer B contained in the hydrogenated block copolymer composition.

Thus, in the step (3a), as a result of addition of the bifunctional coupling agent to the solution containing a terminally active aromatic vinyl-conjugated diene block copolymer in an amount such that the total amount of the functional groups is less than 1 molar equivalent relative to the active terminal thereof, a portion of the terminally active aromatic vinyl-conjugated diene block copolymer is coupled to form a block copolymer B' before hydrogenation for forming the hydrogenated block copolymer B. The residual terminally active aromatic vinyl-conjugated diene block copolymer without reacting with the bifunctional coupling agent is left unreacted in the solution while it maintains the active terminals.

### <Step (4a)>

Then, in the step (4a), a solution containing the block copolymer B' and a block copolymer A' is prepared by adding an aromatic vinyl monomer to the solution containing a block copolymer B' prepared in the step (3a), and polymerizing the aromatic vinyl monomer.

In the step (4a), as a result of addition of the aromatic vinyl monomer to the solution prepared in the step (3a), the aromatic vinyl monomer is polymerized to extend the aromatic vinyl polymer chain having the active terminal in the residual terminally active aromatic vinyl-conjugated diene block copolymer without reacting with the bifunctional coupling agent. Thereby, a block copolymer A' is prepared. The block copolymer A' will form a block copolymer before hydrogenation for forming the hydrogenated block copolymer A.

At this time, the aromatic vinyl polymer chain formed in the step (4a) will form the aromatic vinyl polymer block Ar2^{a} having a relatively large weight average molecular weight in the hydrogenated block copolymer A contained in the hydrogenated block copolymer composition. For this reason, the polymerization conditions in the step (4a) including the amount of the aromatic vinyl monomer may be determined according to the target weight average molecular weight of the aromatic vinyl polymer block Ar2^{a}, or the like (for example, the polymerization conditions may be determined in the ranges described in the step (1)).

### <Steps (5a) and (6a)>

Then, the hydrogenated block copolymer composition used in the present invention can be prepared through the operations in the steps (5a) and (6a) described above from the solution containing the block copolymer B' and the block copolymer A' prepared in the step (4a). The steps (5a) and (6a) described above are the same as the steps (6) and (7) described above, and the same conditions can be used.

### [Polyolefin thermoplastic resin C]

The cross-linkable polymer composition according to the present invention contains a polyolefin thermoplastic resin C, in addition to the hydrogenated block copolymer composition described above.

The polyolefin thermoplastic resin C used in the present invention is not particularly limited as long as it is a thermoplastic resin having an olefin as a main repeating unit, and may be any of a homopolymer of an α-olefin, a copolymer of two or more α-olefins, and a copolymer of an α-olefin and a monomer other than an α-olefin, or may be any of modified (co)polymers thereof. The content of an aromatic vinyl polymer unit in the polyolefin thermoplastic resin C is preferably 10% by mass or less, more preferably 1% by mass or less (i.e., substantially free of an aromatic vinyl polymer unit). On the other hand, the polyolefin thermoplastic resin C preferably contains α-olefin units in an amount of 50 by weight or more, more preferably 70% by weight or more, further more preferably 80 by weight or more.

Examples of the polyolefin thermoplastic resin C used in the present invention include homopolymers or copolymers of α-olefins such as ethylene and propylene, for example, homopolymers of α-olefins such as polyethylene (e.g., linear low-density polyethylene (LLDPE), low-density polyethylene (LDPE), medium-density polyethylene (MDPE), high-density polyethylene (HDPE), metallocene polyethylene), polypropylene, metallocene polypropylene, polymethylpentene, and polybutene; copolymers of ethylene and another α-olefin, for example, an ethylene-propylene random copolymer, an ethylene-propylene block copolymer, an ethylene-butene-1 copolymer, an ethylene-propylene-butene-1 copolymer, and an ethylene-cycloolefin copolymer; copolymers of an α-olefin and a vinyl ester mainly composed of the α-olefin and saponified products thereof, for example, an ethylene-vinyl acetate copolymer (EVA) and an ethylene-vinyl alcohol copolymer; copolymers of an α-olefin and an α,β-unsaturated carboxylic acid ester, an α,β-unsaturated carboxylic acid, or the like mainly composed of the α-olefin, for example, an ethylene-α,β-unsaturated carboxylic acid ester copolymer (an ethylene-ethyl acrylate copolymer, an ethylene-methyl methacrylate copolymer, or the like), an ethylene-α,β-unsaturated carboxylic acid copolymer (an ethylene-acrylic acid copolymer, an ethylene-methacrylic acid copolymer, or the like); an acid-modified olefin resin obtained by modifying an α-olefin (co)polymer such as polyethylene or polypropylene with an unsaturated carboxylic acid such as acrylic acid, methacrylic acid, maleic acid, maleic anhydride, fumaric acid, itaconic acid, and/or an anhydride thereof; an ionomer resin obtained by causing Na ion, Zn ion, or the like to act on a copolymer of ethylene and methacrylic acid or the like; and a mixture thereof. These resins used as the polyolefin thermoplastic resin C can be used alone or in combination.

Among these, preferred are ethylene resins (i.e., polyethylene or a copolymer containing ethylene units as a main component), more preferred are polyethylene, and copolymers of ethylene and vinyl ester mainly composed of ethylene units and saponified products thereof. Further more preferred are linear low-density polyethylene (LLDPE), low-density polyethylene (LDPE), medium-density polyethylene (MDPE), an ethylene-vinyl acetate copolymer (EVA), and an ethylene-vinyl alcohol copolymer, and particularly preferred are low-density polyethylene (LDPE) and an ethylene-vinyl acetate copolymer (EVA). The ethylene resin preferably contains ethylene units in an amount of 50% by weight or more, more preferably contains ethylene units in an amount of 70% by weight or more, and further more preferably contains ethylene units in an amount of 80% by weight or more. When the ethylene resin described above is used as the polyolefin thermoplastic resin C, effects of cross-linking can be further improved, and a cross-linked product having high resilience and excellent compression set resistance, and, in addition, having excellent mechanical properties and dimensional stability can be provided with excellent molding properties and good productivity.

The density of the polyolefin thermoplastic resin C is usually selected in the range of 0.80 to 0.97 g/cm³, preferably in the range of 0.85 to 0.96 g/cm³, more preferably in the range of 0.88 to 0.95 g/cm³.

In the cross-linkable polymer composition according to the present invention, the weight ratio (C/(A+B)) of the content of the polyolefin thermoplastic resin C to the total content of the hydrogenated block copolymer A and the hydrogenated block copolymer B is 5/95 to 80/20. When the ratio (C/(A+B)) is excessively small or excessively large, it is difficult to ensure both high resilience and compression set resistance of the cross-linked product to be obtained. In addition, when the ratio (C/(A+B)) is excessively small, it is difficult to ensure both high resilience and compression set resistance of the cross-linked product to be obtained. Furthermore, when molding is performed concurrently with or after cross-linking, defects in molding are likely to occur. The ratio (C/(A+B)) is preferably 10/90 to 70/30, more preferably 12/88 to 60/40, further more preferably 15/85 to 50/50. When the ratio (C/(A+B)) is within the above ranges, effects of cross-linking can be further improved, and a cross-linked product having high resilience and excellent compression set resistance, and, in addition, having excellent mechanical properties and dimensional stability can be provided with excellent molding properties and good productivity.

### [Cross-linking agent]

The cross-linkable polymer composition according to the present invention contains a cross-linking agent in addition to the hydrogenated block copolymer composition described above and the polyolefin thermoplastic resin C described above.

Examples of the cross-linking agent include chemical cross-linking-type cross-linking agents such as peroxide-based cross-linking agents and sulfur-based cross-linking agents; photo cross-linking-type cross-linking agents; and the like. The cross-linking agents can be used alone or in combination.

Examples of the peroxide-based cross-linking agents include organic peroxide-based cross-linking agents such as t-butyl hydroperoxide, cumene hydroperoxide, dicumyl peroxide, di-t-butyl peroxide, t-butylcumyl peroxide, 2,5-dimethyl-t-butylperoxyhexane, 2,5-dimethyl-t-butylperoxyhexyne, 1,3-bis(t-butylperoxyisopropyl)benzene, p-chlorobenzoyl peroxide, t-butyl peroxybenzoate, t-butylperoxy isopropyl carbonate, t-butyl benzoate, and 1,1-bis(t-butylperoxy)-3,3,5-trimethylcyclohexane.

When a peroxide-based cross-linking agent is used, a polyfunctional unsaturated compound such as trimethylolpropane trimethacrylate, divinylbenzene, ethylene dimethacrylate, polyethylene glycol dimethacrylate, triallyl isocyanurate, triallyl cyanurate, diallyl phthalate, diallyl itaconate, or triallyl trimellitate can be used as a cross-linking aid.

Examples of the sulfur-based cross-linking agents include sulfur such as powder sulfur, flowers of sulfur, precipitated sulfur, colloidal sulfur, surface-treated sulfur, and insoluble sulfur; sulfur compounds such as sulfur chloride, sulfur dichloride, morpholine disulfide, alkylphenol disulfide, N,N'-dithio-bis(hexahydro-2H-azepin-2-one), phosphorus-containing polysulfides, and polymer polysulfides; and, in addition, tetramethylthiuram disulfide, selenium dimethyldithiocarbamate, 2-(4'-morpholinodithio)benzothiazole, and the like. When the sulfur-based cross-linking agents are used, in addition to the sulfur-based cross-linking agents, sulfur vulcanization accelerators including stearic acid, guanidine-based, aldehyde-amine-based, aldehyde-ammonia-based, thiazole-based, sulfenamide-based, thiourea-based, and xanthate-based sulfur vulcanization accelerators, and the like can be used as sulfur-based cross-linking agents in the sulfur cross-linking system.

The photo cross-linking-type cross-linking agents can be any single compound or any combination of compounds that can produce a free radical which initiates polymerization of one or more monomers in response to light such as ultraviolet light (UV) without causing excessive terminating reactions. Specific examples of known photo cross-linking-type cross-linking agents which can be used include trimethylbenzoylphosphine oxide derivatives such as quinone, benzophenone, benzoin ether, allyl ketone, peroxides, biimidazole, benzil dimethylketal, hydroxyalkylphenylacetophenone, dialkoxyacetophenone, and bis(2,4,6-trimethylbenzoyl)-phenylphosphine oxide; thioxanthone such as aminoketones, benzoylcyclohexanol, methylthiophenyl morpholino ketone, morpholino phenyl aminoketone, α-halogenoacetophenone, oxysulfonyl ketone, sulfonyl ketone, oxysulfonyl ketone, benzoyloxime ester, and 2-isopropylthioxanthone; radical photoinitiators such as camphorquinone, ketocouumarin, and Michler's ketone. Alternatively, the photo cross-linking-type cross-linking agent can be a mixture of compounds one of which produces a free radical when it is induced by a sensitizing agent activated by radioactive rays. The photo cross-linking-type cross-linking agents are preferably sensitive to visible or ultraviolet light (actinic ray). The polyfunctional unsaturated compounds described above can be used in combination with radical photoinitiators.

The cross-linking agents used in the present invention are not limited to the cross-linking agents described above, but can be cross-linking agents that can cause cross-linking of the cross-linkable polymer composition according to the present invention in response to active energy rays such as electron beams and radioactive rays.

The cross-linking agent used in the present invention is preferably, but not particularly limited to, an organic peroxide-based cross-linking agent, more preferably dicumyl peroxide.

The content of the cross-linking agent is preferably within the range of 0.01 to 20 parts by mass, more preferably within the range of 0.1 to 10 parts by mass, further more preferably within the range of 0.5 to 5 parts by mass relative to the total content (A+B+C) as 100 parts by mass of the hydrogenated block copolymer A, the hydrogenated block copolymer B, and the polyolefin thermoplastic resin C in the cross-linkable polymer composition according to the present invention. When the content of the cross-linking agent is within the above ranges, effects of cross-linking can be further improved, and a cross-linked product having high resilience and excellent compression set resistance, and, in addition, having excellent mechanical properties and dimensional stability can be provided with excellent molding properties and good productivity.

### [Other components]

The cross-linkable polymer composition according to the present invention may further contain an antioxidant, zinc oxide, a foaming agent, a foaming aid, a filler, a tackifier resin, a softening agent, an antimicrobial agent, a photostabilizer, an ultraviolet absorbing agent, a dye, a lubricant, and the like as necessary.

The cross-linkable polymer composition according to the present invention may contain an antioxidant as necessary. The type of the antioxidant is not particularly limited, and examples of the antioxidant used include hindered phenol compounds such as pentaerythritol tetrakis[3-(3,5-di-t-butyl-4-hydroxyphenyl)propionate], 2,6-di-t-butyl-p-cresol, and di-t-butyl-4-methylphenol; thiodicarboxylate esters such as dilauryl thiopropionate; phosphites such as tris(nonylphenyl) phosphite; and the like. The antioxidants can be used alone or in combination.

The content of the antioxidant is usually, but not particularly limited to, 10 parts by weight or less, preferably 0.5 to 5 parts by weight relative to the total content (A+B+C) as 100 parts by mass of the hydrogenated block copolymer A, the hydrogenated block copolymer B, and the polyolefin thermoplastic resin C in the cross-linkable polymer composition according to the present invention. The timing at which the antioxidant is added to the cross-linkable polymer composition is not particularly limited. For example, the antioxidant may be added in advance to the hydrogenated block copolymer composition used to prepare the cross-linkable polymer composition, or may be added when the hydrogenated block copolymer composition and the polyolefin thermoplastic resin C are mixed together.

The cross-linkable polymer composition according to the present invention may contain zinc oxide as necessary. The content of the zinc oxide is usually, but not particularly limited to, 10 parts by weight or less, preferably 0.5 to 5 parts by weight relative to the total content (A+B+C) as 100 parts by mass of the hydrogenated block copolymer A, the hydrogenated block copolymer B, and the polyolefin thermoplastic resin C in the cross-linkable polymer composition according to the present invention.

When the cross-linkable polymer composition according to the present invention is used for producing a cross-linked foam body, the cross-linkable polymer composition according to the present invention may contain a foaming agent as necessary. The type of the foaming agent is not particularly limited, and examples of the foaming agent include chemical foaming agents such as thermal decomposition-type foaming agents and reaction-type foaming agents; physical foaming agents; and the like. The foaming agents can be used alone or in combination.

Examples of the thermal decomposition-type foaming agents include organic thermal decomposition-type foaming agents such as azo compounds, nitroso compounds, hydrazine derivatives, semicarbazide compounds, tetrazole compounds, and organic acids; inorganic thermal decomposition-type foaming agents such as bicarbonates, carbonates, organic acid salts, and nitrites; and the like.

More specifically, examples of the azo compounds include azodicarbonamide (ADCA), azobisisobutyronitrile (AIBN), barium azodicarboxylate, diazoaminobenzene, and the like. Examples of the nitroso compounds include dinitrosopentamethylenetetramine (DPT), and the like. Examples of the hydrazine derivatives include p,p'-oxybis(benzenesulfonylhydrazide) (OBSH), p-toluenesulfonyl hydrazide (TSH), hydrazodicarbonamide (HDCA), and the like. Examples of the semicarbazide compounds include p-toluenesulfonylsemicarbazide, and the like. Examples of the tetrazole compounds include 5-phenyltetrazole, 1,4-bistetrazole, and the like. Examples of the organic acids include polycarboxylic acids such as citric acid, oxalic acid, fumaric acid, phthalic acid, malic acid, and tartaric acid; and the like.

Examples of the reaction-type foaming agents include a combination of an isocyanate compound and water, a combination of sodium bicarbonate and an acid, a combination of hydrogen peroxide and yeast, a combination of zinc powder and an acid, and the like.

Examples of the physical foaming agent include gases such as fluorocarbon gas and carbon dioxide; volatile liquids such as water and volatile hydrocarbon compounds; thermally expandable microcapsules containing these gases, volatile liquids, or the like; and the like.

Among these, from the viewpoint of capability of achieving a high foaming ratio, chemical foaming agents are preferred, thermal decomposition-type foaming agents are more preferred, azo compounds are further more preferred, and azodicarbonamide (ADCA) is particularly preferred.

The content of the foaming agents may be determined according to the target foaming ratio, and is preferably, but not particularly limited to, within the range of 0.1 to 20 parts by mass, more preferably within the range of 0.2 to 10 parts by mass, further more preferably within the range of 0.5 to 5 parts by mass relative to the total content (A+B+C) as 100 parts by mass of the hydrogenated block copolymer A, the hydrogenated block copolymer B, and the polyolefin thermoplastic resin C in the cross-linkable polymer composition according to the present invention.

The cross-linkable polymer composition according to the present invention allows an effective reduction in leakage of bubbles from the cross-linkable polymer composition during cross-linking and foaming, and thus can be foamed at a high foaming ratio. Thus, when the preferred foaming agent described above is included in the preferred amount described above, the cross-linkable polymer composition can be foamed at a high foaming ratio while leakage of bubbles from the cross-linkable polymer composition is effectively reduced.

When the foaming agent is used, it is preferred that a foaming aid such as urea be further used. The content of the foaming aid is preferably, but not particularly limited, 10 to 300 parts by weight, more preferably 20 to 100 parts by weight relative to 100 parts by mass of the cross-linking agent in the cross-linkable polymer composition according to the present invention. The content of the foaming aid is preferably, but not particularly limited, 10 to 300 parts by weight, more preferably 20 to 100 parts by weight relative to 100 parts by mass of the foaming agent in the cross-linkable polymer composition according to the present invention.

The cross-linkable polymer composition according to the present invention may contain a filler as necessary. The type of the filler is not particularly limited, and examples of the filler include clay, titanium oxide, silicon oxide, talc, calcium carbonate, carbon black, and the like. The fillers can be used alone or in combination.

The content of the filler is preferably, but not particularly limited to, 20 parts by weight or less, more preferably 10 parts by weight or less, further more preferably 5 parts by weight or less relative to the total content (A+B+C) as 100 parts by mass of the hydrogenated block copolymer A, the hydrogenated block copolymer B, and the polyolefin thermoplastic resin C in the cross-linkable polymer composition according to the present invention.

The cross-linkable polymer composition according to the present invention may contain a polymer component other than the hydrogenated block copolymer A, the hydrogenated block copolymer B, and the polyolefin thermoplastic resin C in the range not impairing the advantageous effects of the present invention.

Examples of the polymer component other than the hydrogenated block copolymer A, the hydrogenated block copolymer B, and the polyolefin thermoplastic resin C which can be contained in the cross-linkable polymer composition according to the present invention include aromatic vinyl-conjugated diene-aromatic vinyl block copolymers other than the hydrogenated block copolymer A and the hydrogenated block copolymer B, aromatic vinyl-conjugated diene block copolymers, aromatic vinyl homopolymers, conjugated diene homopolymers, aromatic vinyl-conjugated diene random copolymers, and branched polymers thereof; thermoplastic elastomers such as polyurethane thermoplastic elastomers, polyamide thermoplastic elastomers, and polyester thermoplastic elastomers; thermoplastic resins such as polyvinyl chloride, acrylonitrile-styrene copolymers, acrylonitrile-butadiene-styrene copolymers, and polyphenylene ether; and the like.

In the cross-linkable polymer composition according to the present invention, the content of the polymer component other than the hydrogenated block copolymer A, the hydrogenated block copolymer B, and the polyolefin thermoplastic resin C is preferably 20 parts by weight or less, more preferably 10 parts by weight or less, further more preferably 5 parts by weight, particularly preferably 1 part by weight or less, most preferably substantially 0 parts by weight relative to the total content (A+B+C) as 100 parts by mass of the hydrogenated block copolymer A, the hydrogenated block copolymer B, and the polyolefin thermoplastic resin C in the cross-linkable polymer composition according to the present invention.

### [Cross-linkable polymer composition]

The shape of the cross-linkable polymer composition according to the present invention is not particularly limited, and can be suitably shaped into a desired shape. For example, the cross-linkable polymer composition can be shaped into pellets, sheets, strands, chips, or the like.

The cross-linkable polymer composition according to the present invention may be produced, for example, by a method of mixing the block copolymer composition, the polyolefin thermoplastic resin C, the cross-linking agent, and various additives that are used as necessary.

The method for mixing these components is not particularly limited, and examples thereof include a method of subjecting the components to melt mixing under heat using a kneading apparatus such as a roll, a Banbury mixer, a kneader, a Labo plastomill, a single screw extruder, or a twin screw extruder; and a method of dissolving the components in a solvent and homogeneously mixing the components, and then removing the solvent by heating or the like. Among these, the method of performing melt mixing under heat is preferred from the viewpoint of more efficiently performing the mixing. The temperature for melt mixing under heat is preferably in the range where the components can be prevented from excessive decomposition or unexpected cross-linking reactions. The temperature at the time of melt mixing under heat is preferably in a range where excessive decomposition or unexpected crosslinking reaction of the components can be suppressed, for example, preferably 90 to 150°C, more preferably 100 to 130°C.

### [Cross-linked product]

The cross-linked product according to the present invention can be obtained by cross-linking the cross-linkable polymer composition according to the present invention. The cross-linked product according to the present invention ensures a good balance of high resilience and excellent compression set resistance.

The method for cross-linking the cross-linkable polymer composition is not particularly limited, and known methods can be used according to the type of the cross-linking agent and the target shape of the cross-linked product. For example, when a chemical cross-linking-type cross-linking agent is used, the cross-linkable polymer composition can be cross-linked by heating. The heating temperature in the cross-linking is preferably, for example, 130 to 250°C, more preferably 140 to 200°C. The heating time is preferably, for example, 1 minute to 60 minutes.

The cross-linked product according to the present invention is produced by cross-linking the cross-linkable polymer composition according to the present invention, and thus contains the hydrogenated block copolymer A, the hydrogenated block copolymer B, and the polyolefin thermoplastic resin C. The contents of these components in the cross-linked product are the same as the contents of these components in the cross-linkable polymer composition, and the same applies to the preferred ranges.

The cross-linked product according to the present invention is usually a product produced by cross-linking and molding the cross-linkable polymer composition according to the present invention (a cross-linked molded body). The timings at which cross-linking and molding are performed may be the same or different.

### [Cross-linked foam body]

The cross-linked product according to the present invention can be a cross-linked foam body produced by cross-linking and foaming the cross-linkable polymer composition according to the present invention. The present invention also relates to such a cross-linked foam body.

The cross-linked foam body according to the present invention ensures a good balance of high resilience and excellent compression set resistance. On the other hand, the cross-linkable polymer composition according to the present invention allows an effective reduction in leakage of bubbles from the cross-linkable polymer composition during cross-linking and foaming, and thus not only can be foamed at a high foaming ratio to reduce the apparent density of the cross-linked foam body according to the present invention, but also can provide a highly uniform cross-linked foam body.

The method for producing the cross-linked foam body according to the present invention preferably include, but is not particularly limited to, a method that includes using the cross-linkable polymer composition according to the present invention that contains a chemical foaming agent, heating and pressing the cross-linkable polymer composition according to the present invention contained in a mold to crosslink and decompose the foaming agent, and then opening the mold to foam the composition. According to such a production method, the composition can be foamed at a high foaming ratio.

The conditions for the heating and pressing are not particularly limited, but usually the temperature for heating and pressing is usually 130 to 250°C, preferably 140 to 200°C, the pressure for heating and pressing is usually 1 to 30 MPa, preferably 3 to 20 MPa, and the time for heating and pressing is usually 1 minute to 90 minutes, preferably 5 to 30 minutes.

As the method for producing the cross-linked foam body according to the present invention, a method that includes foaming the cross-linkable polymer composition according to the present invention by a known method and cross-linking the foamed product by a known method can be also used. Examples of this method include a method that includes mixing the cross-linkable polymer composition according to the present invention and a physical foaming agent, then converting the physical foaming agent dissolved or dispersed in the cross-linkable polymer composition according to the present invention into a gas phase to cause foaming, and then cross-linking the composition.

The physical foaming agent is a liquefied gas or a supercritical fluid, and can be transformed into a gas phase by reducing pressure or heating. Examples of the physical foaming agent include aliphatic hydrocarbons such as butane, alicyclic hydrocarbons such as cyclobutane, inorganic gases such as carbon dioxide, nitrogen, or air, and the like. Among these, supercritical fluids are preferred, supercritical fluids of carbon dioxide and nitrogen are more preferred, and a supercritical fluid of nitrogen is further more preferred.

Examples of the foaming method include an injection-molding foaming method. Specifically, a thermoplastic component in the cross-linkable polymer composition is plasticized in a cylinder and a physical foaming agent is injected into the cylinder to dissolve or disperse the physical foaming agent in the plasticized components, then the resulting mixture is injected into a mold, and the physical foaming agent in the mixture is converted to a gas phase after or concurrently with the injection to cause foaming of the mixture.

Examples of the injection-molding foaming method that converts a physical foaming agent in the mixture into a gas phase after or concurrently with the injection include a short shot method, a full shot method, a core-back method, and the like. Among these, from the viewpoint of capability of uniformly generating bubbles in the foam body, a core-back method is preferred. The core-back method is a method that includes using a mold whose cavity volume is enlargeable, and enlarging the cavity volume of the mold after or concurrently with injection molding to convert the physical foaming agent into a gas phase.

As the method for foaming, a method that includes using various melt molding machine such as an extrusion molding machine instead of the injection molding machine can be also used. From the viewpoint of further increasing the foaming ratio (i.e., further reducing the apparent density of the cross-linked foam body), the foaming can be further enhanced by foaming the mixture and thereafter heating the foamed mixture again.

As a cross-linking method, various cross-linking methods described above can be also used.

The apparent density of the cross-linked foam body according to the present invention is preferably, but particularly limited to, 0.06 to 0.60 g/cm³, more preferably 0.10 to 0.55 g/cm³, further more preferably 0.12 to 0.50 g/cm³. Since the cross-linked foam body according to the present invention is obtained by using the cross-linkable polymer composition according to the present invention, even when the foaming ratio is high (in other words, the apparent density of the resulting cross-linked foam body is low, for example, 0.22 g/cm³ or less), the cross-linked foam body according to the present invention not only ensures a good balance of high resilience and excellent compression set resistance, but also is highly uniform.

### [Other cross-linked molded bodies]

The cross-linked product according to the present invention is not limited to the cross-linked foam bodies described above, and may be, for example, a cross-linked molded body that is obtained by cross-linking the cross-linkable polymer composition according to the present invention and molding the cross-linked product into fibers, films, tubes, or the like. The method for producing the cross-linked molded body is not particularly limited, but may be a method that includes molding the cross-linkable polymer composition according to the present invention, and then cross-linking the molded product, and may be a method that includes cross-linking a preliminarily molded body that is produced by preliminary molding of the cross-linkable polymer composition according to the present invention, and then molding the cross-linked preliminarily molded body.

As described above, when the cross-linkable polymer composition according to the present invention is used, it is possible to perform molding concurrently or after cross-linking and, as necessary, with a high strain (e.g., perform molding at a high stretching ratio). Thus, as the method for producing the cross-linked molded body, a method that includes cross-linking a preliminarily molded body that is produced by preliminary molding of the cross-linkable polymer composition according to the present invention, and then molding the cross-linked preliminarily molded body with a high strain can be suitably used. According to such a production method, a cross-linked molded body that not only ensures both high resilience and excellent compression set resistance but also has excellent mechanical properties and dimensional stability can be produced. Such a production method is suitable for producing a cross-linked molded body in the form of fibers, films, tubes, or the like. In this case, according to a target shape of the cross-linked molded body, a known molding method can be used as a molding method (e.g., a stretching method), and the various cross-linking methods described above can be used as a cross-linking method.

### [Applications]

The cross-linked product produced by cross-linking the cross-linkable polymer composition according to the present invention ensures a good balance of high resilience and excellent compression set resistance, and thus has various suitable applications such as clothing, daily necessaries, medical devices, electronic devices, electrical appliances, packaging materials, transport planes, construction materials, and parts of the foregoing.

Furthermore, the cross-linked foam body according to the present invention ensures a good balance of high resilience and excellent compression set resistance, is highly uniform, and, as necessary, can have a low apparent density. Thus, the cross-linked foam body according to the present invention can have various suitable applications described above. In particular, the cross-linked foam body according to the present invention is suitable for applications in which excellent resilience, compression set resistance, and uniformity are required, and, as necessary, lightweightness is required, for example, for various cushioning applications such as a shoe midsole, a cushioning material for batteries, and a weather strip.

### EXAMPLES

Hereinafter, the present invention will be more specifically described by way of Examples and Comparative Examples, but the present invention will not be limited only to these Examples. To be noted, "parts" and "%" are weight-based unless otherwise specified. The following test methods were performed in Examples and Comparative Examples.

### [Weight average molecular weight and molecular weight distribution of hydrogenated block copolymer composition (entire)]

A chart based on the molecular weight against polystyrene standards was obtained by high performance liquid chromatography where tetrahydrofuran at a flow rate of 0.35 ml/min was used as a carrier, and the weight average molecular weight and the molecular weight distribution were determined based on the obtained chart. The measurement was performed using an apparatus HLC8320 available from Tosoh Corporation, three columns (Shodex (registered trademark) KF-404HQ available from Showa Denko K.K.) connected in series (column temperature: 40°C), and a differential refractometer and an ultraviolet detector as detectors. The molecular weight was calibrated against 12 points of polystyrene standards (500 to 3,000,000) available from Polymer Laboratories Ltd.

### [Weight ratio of block copolymers]

The weight ratio of the block copolymers was determined from the ratio of the areas of the peaks corresponding to the block copolymers in a chart obtained by high performance liquid chromatography.

### [Weight average molecular weight of styrene polymer block in each block copolymer]

According to the method described in Rubber Chem. Technol., 45, 1295 (1972), the isoprene polymer block of each of the (hydrogenated) block copolymers was decomposed by reacting the (hydrogenated) block copolymers with ozone, followed by reduction with lithium aluminum hydride.

Specifically, the following procedure was performed. Namely, 300 mg of a sample was dissolved in a reaction vessel containing 100 ml of dichloromethane treated with a molecular sieve. This reaction vessel was placed into a cooling tank, and was cooled to -25°C. Thereafter, while oxygen was flowing into the reaction vessel at a flow rate of 170 ml/min, ozone generated by an ozone generator was introduced. After 30 minutes had passed from the start of the reaction, it was confirmed that the reaction had completed by introducing the gas flowing out of the reaction vessel into a potassium iodide aqueous solution. In the next step, 50 ml of diethyl ether and 470 mg of lithium aluminum hydride were placed into another reaction vessel purged with nitrogen. While the reaction vessel was being cooled with iced water, the solution reacted with ozone was slowly added dropwise to the reaction vessel. Thereafter, the reaction vessel was placed into a water bath, and was gradually heated, and the solution was refluxed at 40°C for 30 minutes. Subsequently, while the solution was being stirred, diluted hydrochloric acid was added dropwise to the reaction vessel in small portions. The addition was continued until generation of hydrogen was hardly observed. After this reaction, a solid product formed in the solution was separated through filtration. The solid product was extracted with 100 ml of diethyl ether for 10 minutes. The extract and the filtrate obtained from the filtration were combined, and the solvent was distilled off to yield a solid sample. The resulting sample as above was measured for the weight average molecular weights according to the above-described weight average molecular weight measuring method, and the values were defined as the weight average molecular weights of the styrene polymer blocks.

### [Weight average molecular weight of the (hydrogenated) isoprene polymer block in each block copolymer]

The weight average molecular weight of the (hydrogenated) isoprene polymer block was determined based on a value calculated by subtracting the weight average molecular weight of each of the styrene polymer blocks from the weight average molecular weight of the corresponding block copolymer.

### [Vinyl bond content in (hydrogenated) isoprene polymer block]

The vinyl bond content in a (hydrogenated) isoprene polymer block was determined based on ¹H NMR measurement using deuterochloroform as a solvent.

### [Styrene unit content in each block copolymer]

The styrene unit content was determined based on the ratio of intensities detected by the differential refractometer and the ultraviolet detector in the measurement by high performance liquid chromatography. To be noted, copolymers having different contents of styrene units were preliminarily prepared, and were used to create a calibration curve.

### [Styrene unit content in entire hydrogenated block copolymer composition]

The styrene unit content in an entire hydrogenated block copolymer composition was determined based on ¹H-NMR measurement using deuterochloroform as a solvent.

### [Hydrogenation ratio (mol%) of olefins in hydrogenated block copolymer composition (entire)]

For each of the block copolymer compositions before hydrogenation and the hydrogenated block copolymer compositions after hydrogenation, the olefin content was determined by ¹H-NMR spectrum measurement using deuterochloroform as a solvent. Based on the difference between the olefin contents before and after hydrogenation, the hydrogenation ratio (mol%) of olefins was calculated.

In the ¹H-NMR spectrum measurement, deuterochloroform was used as a solvent, and an NMR analyzer JMN-AL series AL400 (available from JEOL, Ltd.) was used.

In Examples and Comparative Examples, the block copolymer compositions before hydrogenation and the hydrogenated block copolymer composition after hydrogenation both contained only isoprene units as olefin-derived monomer units. Thus, the hydrogenation ratio of isoprene was determined in the measurement, and this ratio was defined as the hydrogenation ratio of olefins.

### [Density of hydrogenated block copolymer composition]

A volumetric flask with a volume of 100 cm³ was charged with about 10 g of a hydrogenated block copolymer composition, and the mass of the charged hydrogenated block copolymer composition was precisely weighed. Next, the volumetric flask containing the hydrogenated block copolymer composition was filled with isopropanol precisely up to the marked line with care not to include bubbles. The mass of the isopropanol added to the volumetric flask was precisely weighed, and the density (g/cm³) of the hydrogenated block copolymer composition was calculated according to the following Formula (I). Density of hydrogenated block copolymer composition (g/cm3) = [Mass of hydrogenated block copolymer composition]/(100 - [Mass of isopropanol]/[Density of isopropanol at temperature at time of measurement])

### [Molding properties of cross-linkable polymer composition]

The molding properties were evaluated based on whether foam molding was a success or not.
Good: Foam molding succeeded.
Poor: Foam molding failed.

### [Apparent density of cross-linked foam body (cross-linked product)]

The mass of the cross-linked foam body (cross-linked product) was precisely weighed, then the volume of the cross-linked foam body (cross-linked product) was measured, and the apparent density of the cross-linked foam body (cross-linked product) was calculated based on the measurement results.

### [50% compressive stress]

A sample of the cross-linked foam body (cross-linked product) was compressed at a temperature of 23°C and a compression speed of 2.0 mm/min using a universal tester (a dual column universal testing system 5969 (table model), load cell type, 50 kN, available from Instron) to obtain a compressive stress-strain curve. The 50% compressive stress of the cross-linked foam body (cross-linked product) was determined from the compressive stress-strain curve.

### [Compression set]

The compression set of the cross-linked foam body (cross-linked product) was measured at a compression ratio of 50% and a temperature of 50°C for a compression time of 5 hours according to JIS-K6262.

### [Production Example 1]

### (1) Preparation of block copolymer composition before hydrogenation

56.6 kg of cyclohexane, 397 mmol of dibutyl ether, and 1.18 kg of styrene were added to a pressure-resistant reactor. While the system was being stirred at 50°C, 213 mmol of n-butyllithium (1.6M solution) was added. After the addition was completed, the system was heated to 55°C, followed by polymerization for 1 hour (first stage of polymerization). The polymerization conversion ratio of styrene at this time was 100%.

Subsequently, while the temperature was being controlled to keep 50 to 60°C, 5.00 kg of isoprene was continuously added to the reactor over 1 hour. The addition of isoprene was completed, followed by polymerization for another one hour (second stage of polymerization). The polymerization conversion ratio of isoprene at this time was 100%.

In the next step, while the temperature was being controlled to keep 50 to 60°C, 1.18 kg of styrene was continuously added over 1 hour. The addition of styrene was completed, followed by polymerization for another one hour to prepare a solution containing a terminally active styrene-isoprene-styrene triblock copolymer (third stage of polymerization). The polymerization conversion ratio of styrene at this time was 100%.

In the next step, 148 mmol of methanol as a polymerization terminator was added and mixed to deactivate a portion of the active terminal of the terminally active styrene-isoprene-styrene triblock copolymer, thereby preparing a solution containing a styrene-isoprene-styrene triblock copolymer which corresponds to a block copolymer B' for preparing a hydrogenated block copolymer B.

Thereafter, while the temperature was further successively being controlled to keep 50 to 60°C, 2.65 kg of styrene was continuously added over 1 hour. The addition of styrene was completed, followed by polymerization for another one hour to prepare a solution containing a terminally active styrene-isoprene-styrene triblock copolymer which corresponds to a block copolymer A' for preparing a hydrogenated block copolymer A (fourth stage of polymerization). The polymerization conversion ratio of styrene at this time was 100%.

Finally, the active terminal of the terminally active styrene-isoprene-styrene triblock copolymer was completely deactivated by adding and mixing 278 mmol of methanol as a polymerization terminator, to complete the polymerization reaction. Thereby, a solution containing a block copolymer composition before hydrogenation was prepared.
The amounts of the reagents used in the reactions are summarized in Table 1.

### (2) Hydrogenation of block copolymer composition before hydrogenation

The resulting solution containing a block copolymer composition before hydrogenation was hydrogenated to prepare a solution containing a hydrogenated block copolymer composition. The hydrogenation reaction was performed at a hydrogen pressure of 3 MPa and a reaction temperature of 80°C for a reaction time of 3 hours after a Ni(AcAc)₂-TIBAL catalyst as a hydrogenating catalyst was added to the solution containing a block copolymer composition before hydrogenation obtained above in a proportion of 0.5% relative to the block copolymer composition before hydrogenation. A portion of the resulting solution thus obtained was sampled, and the measurements described above were performed in the same manner. The results are shown in Table 2.

### (3) Recovery of hydrogenated block copolymer composition

0.3 Parts of 2,6-di-t-butyl-p-cresol as an antioxidant was added to and mixed with 100 parts of the solution of a hydrogenated block copolymer composition obtained as described above. The mixed solution was added dropwise in small portions to hot water heated to 85 to 95°C, and the solvent was volatilized to yield a precipitate. The resulting precipitate was crushed, and was dried with hot air at 85°C to recover a hydrogenated block copolymer composition in the form of crumbs. The hydrogenated block copolymer composition in the form of crumbs was fed to a single screw extruder including an underwater hot cutter at the leading end of the extruder, and was formed into cylindrical pellets having an average diameter of about 5 mm and an average length of about 5 mm. The pellets were placed into a hopper dryer heated to 60°C, and was dried for 10 hours while dry air at 60°C was flowing, thereby obtaining a hydrogenated block copolymer composition. The density of the resulting hydrogenated block copolymer composition was measured according to the method described above. The results are shown in Table 2.

### [Production Examples 2 to 4]

Hydrogenated block copolymer compositions were obtained in the same manner as in Production Example 1 except that the amounts of the materials used in the reactions were varied as shown in Table 1 instead of the amounts of those used in Production Example 1. The results are shown in Table 2.

In Production Examples 3 and 4, methanol was added in the amounts as described in Table 1 as a polymerization terminator after the third stage of polymerization, and the resultant solution was mixed to inactivate all of the active terminals in the terminally active styrene-isoprene-styrene triblock copolymer to afford a solution containing a block copolymer composition before hydrogenation. Then, a hydrogenated block copolymer composition was obtained as in Production Example 1 except that a solution containing the resulting block copolymer composition before hydrogenation was used.

### [Table 1]

**Table 1**

| | | Production Example 1 | Production Example 2 | Production Example 3 | Production Example 4 |
|---|---|---|---|---|---|
| Cyclohexane (kg) | | 56.6 | 56.6 | 56.6 | 56.6 |
| Dibutyl ether (mmol) | | 397 | 484 | 530 | 507 |
| n-Butyllithium (mmol) | | 213 | 259.3 | 284.2 | 272 |
| Styrene (kg) | [First stage of polymerization] | 1.18 | 1.03 | 1.75 | 1.0 |
| Isoprene (kg) | [Second stage of polymerization] | 5.00 | 6.5 | 6.5 | 8.0 |
| Styrene (kg) | [Third stage of polymerization] | 1.18 | 1.03 | 1.75 | 1.0 |
| Methanol (mmol) | [Added after third stage of polymerization] | 148 | 181 | - | - |
| Styrene (kg) | [Fourth stage of polymerization] | 2.65 | 1.45 | - | - |
| Methanol (mmol) | [Added after fourth stage of polymerization] | 278 | 338 | 568.4 | 544 |

### [Table 2]

**Table 2**

| | | Production Example 1 | Production Example 2 | Production Example 3 | Production Example 4 |
|---|---|---|---|---|---|
| (Hydrogenated) block copolymer A | | | | | |
| | Weight average molecular weight of relatively small styrene block (Ar1^{a} ) [Mw(Ar1^{a})] | 5800 | 4200 | - | - |
| | Weight average molecular weight of relatively large styrene block (Ar2^{a} ) [Mw(Ar2^{a})] | 61000 | 29000 | - | - |
| | Mw(Ar2^{a})/Mw(Ar1^{a}) | 10.5 | 6.9 | - | - |
| | Weight average molecular weight of (hydrogenated) isoprene block [Mw(HD^{a})] | 41000 | 42000 | - | - |
| | Vinyl bond content (wt%) in isoprene block (before hydrogenation) | 7 | 8 | - | - |
| | Styrene unit content (wt%) in (hydrogenated) block polymer A | 73 | 55 | - | - |
| (Hydrogenated) block copolymer B | | | | | |
| | Weight average molecular weight [Mw(Ar1^{b}) = Mw(Ar2^{b})) of (hydrogenated) styrene block | 5800 | 4200 | 6000 | 3800 |
| | Weight average molecular weight [Mw(HD^{b})] of (hydrogenated) isoprene block | 41000 | 42000 | 38000 | 49000 |
| | Vinyl bond content (wt%) in isoprene block (before hydrogenation) | 7 | 8 | 8 | 7 |
| | Styrene unit content (wt%) in (hydrogenated) block polymer B | 32 | 24 | 35 | 20 |
| Block copolymer composition (entire) | | | | | |
| | Weight average molecular weight | 64000 | 60000 | 50000 | 52800 |
| | Molecular weight distribution | 1.032 | 1.031 | 1.014 | 1.012 |
| | Styrene unit content (wt%) | 50 | 35 | 35 | 20 |
| | (Hydrogenated) block copolymer A/(hydrogenated) block copolymer B (weight ratio) | 44/56 | 35/65 | - | - |
| | Hydrogenation ratio of olefins (mol%) | 99 | 100 | 100 | 98 |
| | Density (g/cm³) | 0.95 | 0.92 | 0.92 | 0.90 |

### [Examples 1 to 4, Comparative Examples 1 to 4]

A cross-linkable polymer composition was obtained by kneading the components shown in Table 3 at a temperature of 120°C using a roll as a kneader. The resulting cross-linkable polymer composition was fed into a mold, the cross-linkable polymer composition in the mold was compressed at a temperature of 160°C and a pressure of 15 MPa for 10 minutes using a compression molding machine, and then the mold was opened to crosslink and foam the cross-linkable polymer composition to form a cross-linked foam body (cross-linked product). Molding properties of the cross-linkable polymer composition were evaluated according to the methods described above. The results are shown in Table 3.

In Comparative Example 1, however, the cross-linkable polymer composition was not successfully formed because the gas for foaming leaked out of the cross-linkable polymer composition when the mold was opened.

The resulting the cross-linked foam body (cross-linked product) was left to stand at room temperature for 24 hours, then a test piece with a dimension of 3 cm long × 3 cm wide × 1 cm thick was cut therefrom. The apparent density, 50% compressive stress, and compression set were measured using the test piece obtained above. The results are shown in Table 3. In Comparative Example 1, however, any foam body was not obtained, and thus the apparent density of the residue remained in the mold was measured.

The components shown in Table 3 were as follows.
EVA: a cross-linked ethylene-vinyl acetate-based copolymer (content of vinyl acetate unit: 15%), density: 0.936 g/cm³, product name: Ultrasen (i.e., NIPOFLEX as English product name) 630, available from Tosoh Corporation
LDPE: a low-density polyethylene, density: 0.920 g/cm³, product name: Novatec YF30, available from Japan Polypropylene Corporation
ADCA: an azodicarbonamide, a chemical foaming agent, product name ADCA AY-7, available from EIWA CHEMICAL IND. CO., LTD
Foaming aid: a foaming aid containing urea as a main component, product name: Cellpaste K5, available from EIWA CHEMICAL IND. CO., LTD
Dicumyl peroxide: a cross-linking agent, product name: PERCUMYL D, available from NOF CORPORATION

### [Table 3]

**Table 3**

| | | Example Comparative Example | | | | | | | |
|---|---|---|---|---|---|---|---|---|---|
| | | 1 | 2 | 3 | 4 | 1 | 2 | 3 | 4 |
| Proportion of cross-linkable polymer composition for foam body | | | | | | | | | |
| Hydrogenated block copolymer composition | Production Example 1 | 85 | 85 | 50 | | 100 | 10 | | |
| | Production Example 2 | | | | 85 | | | | |
| | Production Example 3 | | | | | | | 85 | |
| | Production Example 4 | | | | | | | | 85 |
| Ethylene thermoplastic resin | EVA | 15 | | 50 | 15 | | 90 | 15 | 15 |
| | LDPE | | 15 | | | | | | |
| Additives | ADCA | 1.5 | 1.5 | 1.5 | 1.5 | 1.5 | 1.5 | 1.5 | 1.5 |
| | Foaming aid | 0.75 | 0.75 | 0.75 | 0.75 | 0.75 | 0.75 | 0.75 | 0.75 |
| | Zinc oxide | 0.75 | 0.75 | 0.75 | 0.75 | 0.75 | 0.75 | 0.75 | 0.75 |
| | Dicumyl peroxide | 1.0 | 1.0 | 1.0 | 1.0 | 1.0 | 1.0 | 1.0 | 1.0 |
| Molding properties of cross-linkable polymer composition | | Good | Good | Good | Good | Poor | Good | Good | Good |

| Evaluation of cross-linked foam body (cross-linked product) | | | | | | | | | |
|---|---|---|---|---|---|---|---|---|---|
| Apparent density (g/cm³) | | 0.19 | 0.18 | 0.19 | 0.18 | 0.93 | 0.20 | 0.19 | 0.18 |
| 50% Compressive stress [23°C] (MPa) | | 0.35 | 0.37 | 0.38 | 0.25 | - | 0.41 | 0.38 | 0.11 |
| Compression set (%) [50% compression × 50°C × 5 hrs] | | 17 | 19 | 24 | 15 | - | 34 | 33 | 17 |

As shown in Table 3, the cross-likable polymer compositions each comprising a hydrogenated block copolymer composition comprising a hydrogenated block copolymer A represented by General Formula (A) and a hydrogenated block copolymer B represented by General Formula (B) in a specific weight ratio (A/B) and having a hydrogenation ratio of olefins of 10 to 100%; and a polyolefin thermoplastic resin C in a specific ratio (C/(A+B)); and further comprising a cross-linking agent had excellent molding properties and could provide a cross-linked foam body (cross-linked product) ensuring a good balance of high resilience and excellent compression set resistance (Examples 1 to 4).

On the other hand, when the polyolefin thermoplastic resin C was not contained, the cross-linked foam body (cross-linked product) could not be obtained, and molding properties were inferior (Comparative Example 1). When the content of the hydrogenated block copolymer composition was excessively low, the resulting cross-linked foam body (cross-linked product) had inferior compression set resistance (Comparative Example 2). When the hydrogenated block copolymer A represented by General Formula (A) was not contained, the resulting cross-linked foam body (cross-linked product) could not ensure a good balance of high resilience and compression set resistance (Comparative Examples 3 and 4).

## Claims

1. A cross-linkable polymer composition comprising:
a hydrogenated block copolymer composition comprising a hydrogenated block copolymer A represented by General Formula (A) and a hydrogenated block copolymer B represented by General Formula (B);
a polyolefin thermoplastic resin C; and
a cross-linking agent,
wherein the hydrogenation ratio of olefins in the polymer components contained in the hydrogenated block copolymer composition is 10 to 100%,
the weight ratio (A/B) of the hydrogenated block copolymer A to the hydrogenated block copolymer B in the hydrogenated block copolymer composition is 10/90 to 80/20, and
the weight ratio (C/(A+B)) of the content of the polyolefin thermoplastic resin C to the total content of the hydrogenated block copolymer A and the hydrogenated block copolymer B is 5/95 to 80/20:
Ar1^{a}-HD^{a}-Ar2^{a} (A)
Ar1^{b}-HD^{b}-Ar2^{b} (B)
where in General Formulae (A) and (B) above, Ar1^{a}, Ar2^{a}, Ar1^{b}, and Ar2^{b} are each an aromatic vinyl polymer block, HD^{a} and HD^{b} are each a hydrogenated polymer block of a conjugated diene polymer, the ratio (Mw(Ar2^{a})/Mw(Ar1^{a})) of the weight average molecular weight of Ar2^{a} (Mw(Ar2^{a})) to the weight average molecular weight of Ar1^{a} (Mw(Ar1^{a})) is 3.0 to 20, and the ratio (Mw(Ar2^{b})/Mw(Ar1^{b})) of the weight average molecular weight of Ar2^{b} (Mw(Ar2^{b})) to the weight average molecular weight of Ar1^{b} (Mw(Ar1^{b})) is 0.95 to 1.05.

2. The cross-linkable polymer composition according to claim 1, wherein the proportion of aromatic vinyl monomer units is 20 to 70 % by weight in the total repeating units of the polymer components in the hydrogenated block copolymer composition.

3. The cross-linkable polymer composition according to claim 1 or 2, wherein in General Formula (A) and General Formula (B) above of the hydrogenated block copolymer composition, HD^{a} and HD^{b} each have a vinyl bond content of 1 to 80 mol%.

4. The cross-linkable polymer composition according to any one of claims 1 to 3, wherein in General Formula (A) and General Formula (B) above of the hydrogenated block copolymer composition, Ar1^{a}, Ar1^{b}, and Ar2^{b} each have a weight average molecular weight in the range of 2,000 to 40,000, and HD^{a} and HD^{b} each have a weight average molecular weight in the range of 10,000 to 300,000.

5. The cross-linkable polymer composition according to any one of claims 1 to 4, wherein the weight average molecular weight of the total polymer components contained in the hydrogenated block copolymer composition is 30,000 to 400,000.

6. The cross-linkable polymer composition according to any one of claims 1 to 5, wherein the polyolefin thermoplastic resin C is an ethylene resin.

7. The cross-linkable polymer composition according to any one of claims 1 to 6, wherein the weight ratio (C/(A+B)) of the content of the polyolefin thermoplastic resin C to the total content of the hydrogenated block copolymer A and the hydrogenated block copolymer B is 15/85 to 50/50.

8. The cross-linkable polymer composition according to any one of claims 1 to 7, further comprising a foaming agent.

9. The cross-linkable polymer composition according to claim 8, wherein the foaming agent is a chemical foaming agent.

10. A cross-linked product which is a cross-linked product of the cross-linkable polymer composition according to any one of claims 1 to 9.

11. A cross-linked foam body which is a cross-linked and foamed product of the cross-linkable polymer composition according to any one of claims 1 to 9.

12. The cross-linked foam body according to claim 11, being a shoe midsole.

13. The cross-linked foam body according to claim 11, being a cushioning material for batteries.

14. The cross-linked foam body according to claim 11, being a weather strip.

15. The cross-linked foam body according to any one of claims 11 to 14, having an apparent density of 0.06 to 0.60 g/cm³.
